# EUROPEAN PATENT APPLICATION

(11) **EP 4 024 245 A1**
(43) Date of publication of application: **06.07.2022**
(21) Application number: 20864889.9
(22) Date of filing: 17.09.2020
(51) Int. Cl.: G06F 21/44, G06K 7/10, H04W 4/80

(54) **NEAR FIELD COMMUNICATION METHOD AND ELECTRONIC DEVICE**

(30) Priority: 18.09.2019 CN 201910883006
(71) Applicant: Huawei Technologies Co., Ltd., Longgang District Shenzhen, Guangdong 518129 (CN)
(72) Inventor: ZHANG, Xiuping, Shenzhen, Guangdong 518129 (CN); YAO, Zhendong, Shenzhen, Guangdong 518129 (CN); YI, Haitao, Shenzhen, Guangdong 518129 (CN); DENG, Qing, Shenzhen, Guangdong 518129 (CN); FANG, Zhaoju, Shenzhen, Guangdong 518129 (CN)
(74) Representative: Pfenning, Meinig & Partner mbB
(86) International application number: PCT/CN2020/115904
(87) International publication number: WO 2021/052421

(57) **Abstract**

This application provides a near field communication method and an electronic device. The method includes: When approaching a card reader device, the electronic device receives a near field communication NFC field strength sensing message and indication information, where the indication information is used to indicate an application identifier AID corresponding to a virtual card, and the virtual card is a card that is not activated in the electronic device, or the indication information is an application data packet, and the application data packet does not include information about an AID; and when the indication information is used to indicate the AID corresponding to the virtual card, the electronic device executes a transaction with the card reader device by using the virtual card, and displays information about the virtual card in a first application, or when the indication information is the application data packet, the electronic device does not display the information about the first application. Embodiments of this application help improve user experience when a user uses the virtual card.

## Description

This application claims priority to Chinese Patent Application No. 201910883006.0, filed with the China National Intellectual Property Administration on September 18, 2019 and entitled "NEAR FIELD COMMUNICATION METHOD AND ELECTRONIC DEVICE", which is incorporated herein by reference in its entirety.

### TECHNICAL FIELD

This application relates to the field of electronic devices, and more specifically, to a near field communication method and an electronic device.

### BACKGROUND

Near field communication (near field communication, NFC) is a short-range high-frequency wireless communications technology in which contactless point-to-point data transmission (within 10 cm) between electronic devices is allowed to exchange data. Currently, NFC works in three modes: a card emulation mode (card emulation mode), a point-to-point mode (P2P mode), and a reader/writer mode (reader/writer mode). The card emulation mode is actually equivalent to an integrated circuit (integrated circuit, IC) card that uses a radio frequency identification (radio frequency identification, RFID) technology, and may replace a large quantity of IC cards, for example, a public transportation card, an access card, an employee card, a UnionPay card, a credit card, and an identity card. In this mode, there is a great advantage, that is, these virtual cards are powered by a radio frequency (radio frequency, RF) field of a contactless card reader, and can work even when a host device is out of power.

It is common for an electronic device to use "Wallet" of a manufacturer of the electronic device as a default payment application, and when receiving NFC field strength (in other words, when approaching a card reader), the electronic device automatically pops up "Wallet" of the manufacturer of the electronic device. However, when a user uses the electronic device to approach a card reader (for example, a door handle card reader or a treadmill card reader) that does not correspond to "Wallet", relatively poor user experience is brought if "Wallet" is automatically popped up.

### SUMMARY

This application provides a near field communication method and an electronic device, to help improve intelligence of the electronic device and improve user experience when a user uses a virtual card.

According to a first aspect, a near field communication method is provided. The method is applied to an electronic device. The electronic device includes a first application, and the first application includes a plurality of virtual cards. The plurality of virtual cards include a first card and a second card. The first card is an activated card in the electronic device. The second card is a card that is not activated. The method includes: When approaching a card reader device, the electronic device receives a near field communication NFC field strength sensing message and first indication information that are sent by the card reader device, where the first indication information is used to indicate an application identifier AID corresponding to the second card, or the first indication information is an application data packet, and the application data packet does not include information about an AID; and when the first indication information is used to indicate the AID corresponding to the second card, the electronic device executes a transaction with the card reader device by using the second card, and displays information about the second card in the first application; or when the first indication information is the application data packet, the electronic device skips displaying information about the first application.

In this embodiment of this application, when the electronic device approaches the card reader device, if a virtual card corresponding to the card reader device is not activated in the electronic device, the electronic device may still execute a transaction with the card reader device by using the virtual card, and a user does not need to manually switch the virtual card. This helps improve intelligence of the electronic device, reduce cumbersome operations performed by the user, and improve user experience when the user uses the virtual card.

Alternatively, when the card reader device is a device (for example, a card reader device related to a host-based card emulation (host-based card emulation, HCE) application) that does not perform AID reporting, the electronic device may determine that a peer device is unrelated to the first application. In this case, the electronic device may not display any information about the first application, to avoid a case in which user experience is affected after the first application is automatically popped up in foreground.

In some possible implementations, when the first indication information is used to indicate the application identifier AID corresponding to the second card, the first indication information is carried in an application selection message, and is sent by the card reader device to the electronic device.

In some possible implementations, if the card reader device is a device, for example, a treadmill, that does not perform AID reporting, the card reader device may send an application data packet to the electronic device. The application data packet does not include information about any AID.

In some possible implementations, the first application is a default application of a manufacturer of the electronic device, for example, "Wallet" in a Huawei mobile phone; or for another example, "Apple Pay" in an iPhone.

In some possible implementations, the electronic device further includes a second application, and the second application includes a third card; and when approaching the card reader device, the electronic device receives a near field communication NFC field strength sensing message and first indication information that are sent by the card reader device, where the first indication information is used to indicate an application identifier AID corresponding to the third card; and the electronic device executes a transaction with the card reader device by using the third card, and displays information about the third card in the second application.

In some possible implementations, the second card is an identification card (for example, an identity card). For example, when the user purchases a ticket by using a virtual card corresponding to the identity card, the electronic device may automatically display information about the identity card.

With reference to the first aspect, in some implementations of the first aspect, the second card is a public transportation card or a bank card, and that the electronic device executes a transaction with the card reader device by using the second card, and displays information about the second card in the first application includes: The electronic device executes a transaction with the card reader device by using the second card, and displays fee deduction information and/or balance information of the second card.

In this embodiment of this application, when the card reader device is a bus gate, a subway gate, or a bank card point of sale (point of sale, POS) terminal, the electronic device may automatically display the fee deduction information and/or the balance information of the second card when the electronic device executes a transaction with the card reader device by using the second card.

With reference to the first aspect, in some implementations of the first aspect, the electronic device includes a secure element SE, the SE stores an AID list, the AID list includes information about the first card and the information about the second card, and before the electronic device displays the information about the second card in the first application, the method further includes: The electronic device activates the second card in the AID list and deactivates the first card.

In this embodiment of this application, when the electronic device determines that a type of the card reader device is unrelated to the activated first card but related to the second card that is not activated, the electronic device may automatically activate the second card in the SE and deactivate the first card, to complete the transaction with the card reader device. This helps improve intelligence of the electronic device, reduce cumbersome operations performed by the user, and improve user experience when the user uses the virtual card.

With reference to the first aspect, in some implementations of the first aspect, before the electronic device receives the first indication information sent by the card reader device, the method further includes: The electronic device receives second indication information sent by the card reader device, where the second indication information is used to indicate a first listening mode of a radio frequency circuit RF; and the electronic device determines, based on the first listening mode, that a peer device is the card reader device.

In some possible implementations, the electronic device sequentially receives the NFC field strength sensing message, the second indication information, and the first indication information.

With reference to the first aspect, in some implementations of the first aspect, the first listening mode is an NFC_A_PASSIVE listening mode.According to a second aspect, a near field communication method is provided. The method is applied to an electronic device. The electronic device includes a first application, and the first application includes a plurality of virtual cards. The plurality of virtual cards include a first card. The first card is an activated card in the electronic device. The method includes: When approaching another electronic device, the electronic device receives an NFC field strength sensing message and first indication information that are sent by the card reader device, where the first indication information is used to indicate a first RF listening mode; and when determining that the first listening mode is not a preset listening mode, the electronic device skips displaying information about the first application.

In this embodiment of this application, when the electronic device determines that the listening mode indicated in the first indication information sent by the another electronic device is not the preset listening mode, the electronic device may not pop up the first application, to help avoid a case in which user experience is affected after the first application is automatically popped up in foreground.

With reference to the second aspect, in some implementations of the second aspect, the preset listening mode is an NFC_A_PASSIVE listening mode.

In some possible implementations, the first listening mode is any one of an NFC_F_PASSIVE listening mode, an NFC_A_ACTIVE listening mode, or an NFC_F_ACTIVE listening mode.According to a third aspect, a near field communication method is provided. The method is applied to an electronic device. The electronic device includes a first application, and the first application includes a plurality of virtual cards. The plurality of virtual cards include a first card and a second card. The first card is an activated card in the electronic device. The second card is an access card, and the access card is a card that is not activated. The method includes: When approaching a card reader device, the electronic device receives a near field communication NFC field strength sensing message sent by the card reader device; and when the electronic device receives no other indication information within preset duration that starts from a moment at which the NFC field strength sensing message is received, the electronic device displays information about the access card in the first application; or
when approaching a card reader device, the electronic device receives a near field communication NFC field strength sensing message and first indication information that are sent by the card reader device, where the first indication information is used to indicate the access card; and the electronic device displays information about the access card in the first application.

With reference to the third aspect, in some implementations of the third aspect, the electronic device includes a secure element SE, the SE stores an AID list, the AID list includes information about the first card and the information about the second card, and before the electronic device displays the information about the access card in the first application, the method further includes: The electronic device activates the access card in the AID list and deactivates the first card.

With reference to the third aspect, in some implementations of the third aspect, if the electronic device does not receive any information within the preset duration that starts from the moment at which the NFC field strength sensing message is received, the electronic device may further determine that the card reader device is a user identification UID access card.

With reference to the third aspect, in some implementations of the third aspect, after receiving the first indication information, the electronic device may determine that the card reader device is a Mifare access card.

With reference to the third aspect, in some implementations of the third aspect, the first application includes a plurality of access cards, and that the electronic device activates the access card in the AID list and deactivates the first card includes: The electronic device determines a first access card from the plurality of access cards; and the electronic device activates the first access card in the AID list and deactivates the first card.

With reference to the third aspect, in some implementations of the third aspect, that the electronic device selects a first access card from the plurality of access cards includes: The electronic device determines the first access card from the plurality of access cards based on a historical card swiping record of a user or a current geographical location of the electronic device.

In this embodiment of this application, the access card in the electronic device is not activated, and when the electronic device determines that the card reader device is a card reader device of the access card, the electronic device may automatically deactivate a default card and activate the access card, so that the information about the access card in the first application may be automatically displayed. This also helps avoid a case in which user experience is affected after the default card in the first application is automatically popped up in foreground.

According to a fourth aspect, a chip system is provided. The chip system includes an application processor AP chip and a near field communication NFC chip. The AP chip includes a first application, and the first application includes a plurality of virtual cards. The plurality of virtual cards include a first card and a second card. The first card is an activated card in an electronic device. The second card is a card that is not activated. The NFC chip is configured to receive an NFC field strength sensing message and first indication information that are sent by a card reader device. The first indication information is used to indicate an application identifier AID corresponding to the second card. Alternatively, the first indication information is an application data packet, and the application data packet does not include information about an AID. The AP chip is configured to receive the NFC field strength message and the first indication information that are sent by the NFC chip. When the first indication information is used to indicate the AID corresponding to the second card, the AP chip is further configured to control a display to display information about the second card in the first application. Alternatively, when the first indication information is the application data packet, the AP chip is further configured to control a display not to display information about the first application.

With reference to the fourth aspect, in some implementations of the fourth aspect, the AP chip is further configured to send indication information to the NFC chip before controlling the display to display the information about the second card in the first application, where the indication information is used to indicate to activate the second card and deactivate the first card; and the NFC chip is further configured to send the indication information to a secure element SE, where the SE stores an AID list, and the AID list includes information about the first card and the information about the second card.

With reference to the fourth aspect, in some implementations of the fourth aspect, the NFC chip is further configured to: before receiving the first indication information sent by the card reader device, receive second indication information sent by the card reader device, where the second indication information is used to indicate a first listening mode of a radio frequency circuit RF; the NFC chip is further configured to send the second indication information to the AP chip; and the AP chip is further configured to determine, based on the first listening mode, that a peer device is the card reader device.

With reference to the fourth aspect, in some implementations of the fourth aspect, the first listening mode is an NFC_A_PASSIVE listening mode.

With reference to the fourth aspect, in some implementations of the fourth aspect, the second card is a public transportation card or a bank card, and the AP chip is specifically configured to control the display to display fee deduction information and/or balance information of the second card.

According to a fifth aspect, a chip system is provided. The chip system includes an application processor AP chip and a near field communication NFC chip. The AP chip includes a first application, and the first application includes a plurality of virtual cards. The plurality of virtual cards include a first card. The first card is an activated card in an electronic device. The NFC chip is configured to receive an NFC field strength sensing message and first indication information that are sent by a card reader device. The first indication information is used to indicate a first RF listening mode. When determining that the first listening mode is not a preset listening mode, the electronic device skips displaying information about the first application.

With reference to the fifth aspect, in some implementations of the fifth aspect, the preset listening mode is an NFC_A_PASSIVE listening mode.

In some possible implementations, the first listening mode is any one of an NFC_F_PASSIVE listening mode, an NFC_A_ACTIVE listening mode, or an NFC_F_ACTIVE listening mode.

According to a sixth aspect, a chip system is provided. The chip system includes an application processor AP chip and a near field communication NFC chip. The AP chip includes a first application, and the first application includes a plurality of virtual cards. The plurality of virtual cards include a first card and a second card. The first card is an activated card in an electronic device. The second card is an access card, and the access card is not activated. The NFC chip is configured to receive an NFC field strength sensing message sent by a card reader device. The NFC chip is further configured to send the NFC field strength message to the AP chip. The AP chip is configured to: when receiving no other indication information within preset duration that starts from a moment at which the NFC field strength message is received, control a display to display information about the access card in the first application.

Alternatively, the NFC chip is configured to receive an NFC field strength sensing message and first indication information that are sent by a card reader device. The first indication information is used to indicate the access card. The NFC chip is further configured to send the NFC field strength message and the first indication information to the AP chip. The AP chip is configured to control a display to display information about the access card in the first application.

With reference to the sixth aspect, in some implementations of the sixth aspect, the AP chip is further configured to: before controlling the display to display the information about the access card in the first application, indicate an SE to activate the access card and deactivate the first card.

With reference to the sixth aspect, in some implementations of the sixth aspect, the first application includes a plurality of access cards, and the AP chip is specifically configured to: determine a first access card from the plurality of access cards; and indicate the SE to activate the first access card in an AID list and deactivate the first card.

With reference to the sixth aspect, in some implementations of the sixth aspect, the AP chip is specifically configured to determine the first access card from the plurality of access cards based on a historical card swiping record of a user or a current geographical location of the electronic device.

According to a seventh aspect, an apparatus is provided. The apparatus is included in an electronic device, and the apparatus has a function of implementing behavior of the electronic device in the foregoing aspects and the possible implementations of the foregoing aspects. The function may be implemented by using hardware, or may be implemented by hardware executing corresponding software. The hardware or the software includes one or more modules or units corresponding to the foregoing functions.

According to an eighth aspect, an electronic device is provided, and includes a display, an NFC chip, an AP chip, one or more processors, a memory, and one or more computer programs. The AP chip includes a first application, and the first application includes a plurality of virtual cards. The plurality of virtual cards include a first card and a second card. The first card is an activated card in the electronic device. The one or more computer programs are stored in the memory. The one or more computer programs include instructions. When the instructions are executed by the electronic device, the electronic device is enabled to perform the near field communication method in any possible implementation of the first aspect or the second aspect.

According to a ninth aspect, a system is provided. The system includes a card reader device and an electronic device. The card reader device communicates with the electronic device by using near field communication NFC. The electronic device includes a first application, and the first application includes a plurality of virtual cards. The plurality of virtual cards include a first card and a second card. The first card is an activated card in the electronic device. The second card is a card that is not activated. The card reader device is configured to send an NFC field strength sensing message and first indication information to the electronic device when the electronic device approaches the card reader device. The first indication information is used to indicate an AID corresponding to the second card, and the plurality of virtual cards include the second card. Alternatively, the first indication information is an application data packet, and the application data packet does not include information about an AID. The electronic device is configured to: when the first indication information indicates the AID corresponding to the second card, execute a transaction with the card reader device by using the second card, and display information about the second card in the first application. Alternatively, when the first indication information is the application data packet, the electronic device skips displaying information about the first application.

With reference to the ninth aspect, in some implementations of the ninth aspect, the card reader device is further configured to send second indication information to the electronic device before sending the first indication information to the electronic device, where the second indication information is used to indicate a first listening mode of a radio frequency circuit RF; and the electronic device is further configured to determine, based on the first listening mode, that a peer device is the card reader device.

With reference to the ninth aspect, in some implementations of the ninth aspect, the first listening mode is an NFC_A_PASSIVE listening mode.

With reference to the ninth aspect, in some implementations of the ninth aspect, the second card is a public transportation card or a bank card, and the electronic device is specifically configured to: when the first indication information indicates the AID corresponding to the second card, execute a transaction with the card reader device by using the second card, and display fee deduction information and/or balance information of the second card.

According to a tenth aspect, this technical solution provides a computer storage medium, including computer instructions. When the computer instructions are run on an electronic device, the electronic device is enabled to perform the near field communication method in any possible implementation of any one of the foregoing aspects.

According to an eleventh aspect, this technical solution provides a computer program product. When the computer program product is run on an electronic device, the electronic device is enabled to perform the near field communication method in any possible implementation of any one of the foregoing aspects.

### BRIEF DESCRIPTION OF DRAWINGS

FIG. 1 is a schematic diagram of a structure of an electronic device according to an embodiment of this application;
FIG. 2 is a schematic diagram of a system architecture according to an embodiment of this application;
FIG. 3 is a schematic flowchart of a process in which an electronic device automatically pops up an application after receiving an NFC system broadcast message according to an embodiment of this application;
FIG. 4A to FIG. 4D show a set of graphical user interfaces GUIs according to an embodiment of this application;
FIG. 5 is a schematic diagram of another system architecture according to an embodiment of this application;
FIG. 6 is a schematic flowchart of a near field communication method according to an embodiment of this application;
FIG. 7A and FIG. 7B are another schematic flowchart of a near field communication method according to an embodiment of this application;
FIG. 8A and FIG. 8B are a schematic flowchart of a determining process of a card reader device determining module according to an embodiment of this application;
FIG. 9 is another schematic flowchart of a determining process of a card reader device determining module according to an embodiment of this application; and
FIG. 10 is a schematic diagram of another system architecture according to an embodiment of this application.

### DESCRIPTION OF EMBODIMENTS

Terms used in the following embodiments are merely intended to describe particular embodiments, but are not intended to limit this application. As used in the specification and appended claims of this application, words "a", "an", "the", "above", "this", and "this one" of singular forms are intended to also include plural forms, for example, "one or more", unless otherwise clearly specified in the context. It should be further understood that, in the following embodiments of this application, "at least one" or "one or more" means one, two, or more. The term "and/or" is used to describe an association between associated objects and represents that three relationships may exist. For example, A and/or B may represent the following three cases: Only A exists, both A and B exist, and only B exists, where A and B may be singular or plural. The character "/" generally represents an "or" relationship between the associated objects.

Reference to "an embodiment", "some embodiments", or the like described in this specification means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment, instead, they mean "one or more but not all of the embodiments", unless otherwise specifically emphasized. The terms "include", "contain", "have", and their variants all mean "include but are not limited to", unless otherwise specifically emphasized.

The following describes an electronic device, a user interface used for the electronic device, and embodiments used for using the electronic device. In some embodiments, the electronic device may be a portable electronic device that further includes another function such as a personal digital assistant function and/or a music player function, for example, a mobile phone, a tablet computer, or a wearable electronic device (for example, a smartwatch) having a wireless communication function. An example embodiment of the portable electronic device includes but is not limited to a portable electronic device provided with iOS^{®}, Android^{®}, Microsoft^{®}, or another operating system. The portable electronic device may alternatively be another portable electronic device, such as a laptop (laptop). It should be further understood that, in some other embodiments, the foregoing electronic device may not be the portable electronic device but a desktop computer.

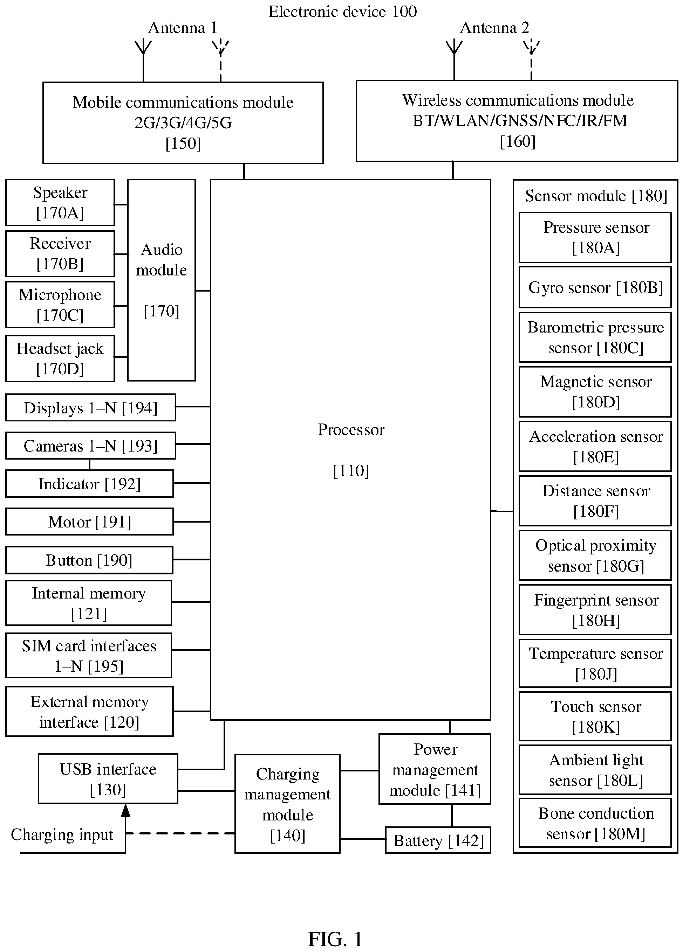

For example, FIG. 1 is a schematic diagram of a structure of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a compass 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 101 may alternatively include one or more processors 110. The controller may generate an operation control signal based on instruction operation code and a time sequence signal, to complete control of instruction reading and instruction execution. In some other embodiments, a memory may further be disposed in the processor 110, to store instructions and data. For example, the memory in the processor 110 may be a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110. In this way, data processing or instruction execution efficiency of the electronic device 101 is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB port, and/or the like. The USB port 130 is a port that conforms to a USB standard specification, and may be specifically a mini USB port, a micro USB port, a USB Type-C port, or the like. The USB interface 130 may be configured to connect to a charger to charge the electronic device 101, or may be configured to transmit data between the electronic device 101 and a peripheral device. The USB interface 130 may alternatively be configured to connect to a headset, and play audio by using the headset.

It may be understood that an interface connection relationship between modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB port 130. In some embodiments in which wireless charging is used, the charging management module 140 may receive a wireless charging input through a wireless charging coil of the electronic device 100. The charging management module 140 may further supply power to the electronic device by using the power management module 141 when the battery 142 is charged.

The power management module 141 is configured to connect the battery 142 and the charging management module 140 to the processor 110. The power management module 141 receives an input of the battery 142 and/or the charging management module 140, and supplies power to the processor 110, the internal memory 121, an external memory, the display 194, the camera 193, the wireless communications module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communications module 150 may provide a solution that is applied to the electronic device 100 and that includes wireless communication such as 2G/3G/4G/5G. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert the signal into an electromagnetic wave by using the antenna 1 for radiation. In some embodiments, at least some function modules of the mobile communications module 150 may be disposed in the processor 110. In some embodiments, at least some function modules of the mobile communications module 150 and at least some modules of the processor 110 may be disposed in a same device.

The wireless communications module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like and that is applied to the electronic device 100. The wireless communications module 160 may be one or more components that integrate at least one communications processor module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave for radiation through the antenna 2.

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini light-emitting diode (mini light-emitting diode, mini LED), a micro-LED, a micro-OLED, quantum dot light emitting diodes (quantum dot light emitting diodes, QLED), or the like. In some embodiments, the electronic device 100 may include one or more displays 194.

In some embodiments of this application, when the display panel is made of a material such as an OLED, an AMOLED, or an FLED, the display 194 in FIG. 1 may be bent. Herein, that the display 194 may be bent means that the display may be bent to any angle at any part, and may be held at the angle. For example, the display 194 may be folded left and right from the middle. Alternatively, the display 194 may be folded up and down from the middle.

The display 194 of the electronic device 100 may be a flexible screen. Currently, the flexible screen attracts much attention due to unique features and huge potential of the flexible screen. Compared with a conventional screen, the flexible screen has features of strong flexibility and bendability, and can provide a user with a new interaction mode based on the feature of bendability, to meet more requirements of the user for an electronic device. For an electronic device configured with a foldable display, the foldable display on the electronic device may be switched between a small screen in a folded form and a large screen in an expanded form at any time. Therefore, the user uses a split-screen function more frequently on the electronic device configured with the foldable display.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and a skin color of the image. The ISP may further optimize parameters such as exposure and a color temperature of a shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to: compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a biological neural network structure, for example, by referring to a mode of transfer between human brain neurons, and may further continuously perform self-learning. Applications such as intelligent cognition of the electronic device 100, such as image recognition, facial recognition, speech recognition, and text understanding, can be implemented by using the NPU.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store one or more computer programs, and the one or more computer programs include instructions. The processor 110 may run the instructions stored in the internal memory 121, so that the electronic device 101 performs a near field communication method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 101, and the like. In addition, the internal memory 121 may include a high-speed random access memory, or may include a non-volatile memory, for example, one or more magnetic disk storage devices, a flash storage device, or universal flash storage (universal flash storage, UFS). In some embodiments, the processor 110 may run the instructions stored in the internal memory 121 and/or the instructions stored in the memory that is disposed in the processor 110, so that the electronic device 101 performs the short-distance information transmission method provided in embodiments of this application, other applications, and data processing. The electronic device 100 can implement audio functions, for example, a music playing function and a recording function, by using the audio module 170, the speaker 170A, the receiver 170B, the microphone 170C, the headset jack 170D, the application processor, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines pressure strength based on a capacitance change. When a touch operation is performed on the display 194, the terminal 100 detects intensity of the touch operation by using the pressure sensor 180A. The terminal 100 may also calculate a touch position based on a detection signal of the pressure sensor 180A. In some embodiments, touch operations that are performed at a same touch position but have different touch operation strength may correspond to different operation instructions. For example, when a touch operation whose touch operation strength is less than a first pressure threshold is performed on a Messages icon, an instruction for viewing an SMS message is executed. When a touch operation whose touch operation strength is greater than or equal to the first pressure threshold is performed on a Messages icon, an instruction for creating an SMS message is executed.

The gyroscope sensor 180B may be configured to determine a moving posture of the terminal 100. In some embodiments, angular velocities of the terminal 100 around three axes (namely, x, y, and z axes) may be determined by using the gyroscope sensor 180B. The gyroscope sensor 180B may be configured to perform image stabilization during photographing. For example, when the shutter is opened, the gyroscope sensor 180B detects an angle at which the terminal 100 jitters, calculates, based on the angle, a distance for which a lens module needs to compensate, and allows the lens to cancel the jitter of the terminal 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the terminal 100 calculates an altitude by using a barometric pressure value measured by the barometric pressure sensor 180C, to assist positioning and navigation.

The magnetic sensor 180D includes a Hall effect sensor. The terminal 100 may detect opening and closing of a flip leather case by using the magnetic sensor 180D. In some embodiments, when the terminal 100 is a clamshell phone, the terminal 100 may detect opening and closing of a flip cover by using the magnetic sensor 180D. Further, a feature such as automatic unlocking upon opening of the flip cover is set based on a detected opening or closing state of the flip cover.

The acceleration sensor 180E may detect values of accelerations in all directions (usually three axes) of the terminal 100. When the terminal 100 is still, a value and a direction of gravity may be detected. The acceleration sensor 180E may be further configured to identify a terminal posture, and is applied to applications such as screen switching between landscape and portrait modes and a pedometer.

The distance sensor 180F is configured to measure a distance. The terminal 100 may measure a distance through infrared light or a laser. In some embodiments, the terminal 100 may use the distance sensor 180F to measure a distance, to implement fast focusing in a photographing scenario.

The optical proximity sensor 180G may include, for example, a light emitting diode (LED) and an optical detector, for example, a photodiode. The light-emitting diode may be an infrared light emitting diode. The terminal 100 emits infrared light by using the light emitting diode. The terminal 100 detects infrared reflected light from a nearby object by using the photodiode. When sufficient reflected light is detected, it may be determined that there is an object near the terminal 100. When insufficient reflected light is detected, the terminal 100 may determine that there is no object near the terminal 100. The terminal 100 may detect, by using the optical proximity sensor 180G, that the terminal 100 held by the user is close to an ear for a call, to automatically turn off a screen to save power. The optical proximity sensor 180G may also be used in a leather case mode or a pocket mode to automatically unlock or lock the screen.

The ambient light sensor 180L is configured to sense ambient light brightness. The terminal 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the terminal 100 is in a pocket to prevent a false touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal 100 executes a temperature processing policy by using a temperature detected by the temperature sensor 180J. For example, when the temperature reported by the temperature sensor 180J exceeds a threshold, the terminal 100 lowers performance of a processor located near the temperature sensor 180J, to reduce power consumption to implement thermal protection. In some other embodiments, when the temperature is lower than another threshold, the terminal 100 heats the battery 142 to prevent the terminal 100 from being shut down abnormally because of a low temperature. In some other embodiments, when the temperature is lower than still another threshold, the terminal 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 form a touchscreen. The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may also be disposed on a surface of the terminal 100 in a position different from a position of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in a headset, to obtain a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal 100 may receive a button input, and generate a button signal input related to a user setting and function control of the terminal 100.

The motor 191 may generate a vibration prompt. The motor 191 may be used for an incoming call vibration prompt, or may be used for a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, a game) may also correspond to different vibration feedback effects. A touch vibration feedback effect may be further customized.

The indicator 192 may be an indicator lamp, and may be configured to indicate a charging status and a power change, or may be configured to indicate a message, a missed call, a notification, and the like.

Before the embodiments of this application are described, several related concepts in the embodiments of this application are first described.

A near field communication controller interface (NFC controller interface, NCI) is a protocol specification of an instruction and data for communication between a near field communication controller (NFC controller, NFCC) and a device host (device host, DH).

An application identifier (applet identifier, AID) is an identifier of an application (applet) stored in a secure element (secure element, SE) or an application on a side of an operating system. In an NFC application scenario, one card type may correspond to one AID.

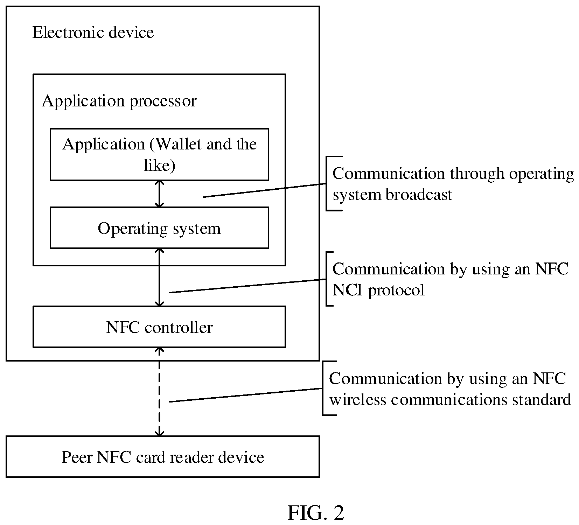

FIG. 2 is a schematic diagram of a system architecture according to an embodiment of this application. As shown in FIG. 2, the system includes a peer NFC card reader device 210 and an electronic device 220. The electronic device 220 includes an application processor (application processor, AP) 221 and an NFCC 222. The AP 221 includes an application 2211 and an operating system (operating system, OS) 2212. The peer NFC card reader device 210 may communicate with the NFCC 222 by using an NFC wireless communications standard. The NFCC 222 may communicate with the OS 2212 by using an NFC NCI protocol. The OS 2212 may communicate with the application 2211 by using system broadcast or a system application programming interface (application programming interface, API).

In an embodiment, the electronic device 220 further includes an SE 223. The SE 223 may exchange information or data with the NFCC 222 by using an NFC application protocol data unit (application protocol data unit, APDU) protocol. The SE 223 is a secure element that is built into the electronic device 220 and that is configured to store confidential data that is not allowed to be tampered with, for example, store user card information. The secure element can enhance a security level of the electronic device. In a data backup process, the SE 223 may create a security domain (security domain). Data in the security domain may be encrypted and then uploaded to an application layer for backup, to improve data security in the backup process.

The peer NFC card reader device 210 is a card reader that approaches the electronic device 220, for example, a bank card point of sale (point of sale, POS) terminal, a subway card reader gate, a bus POS terminal, a vehicle door handle card reader, and a treadmill card reader.

The NFCC 222 is an NFC chip controller on the electronic device, and the controller may directly perform NFC communication with the peer NFC card reader device 210.

The OS 2212 is an operating system running on the electronic device, for example, an Android operating system.

The application 2211 is an application (for example, "Wallet" or "Google Pay") that runs in the OS 2212, and is an application that may be viewed by a user on an operating system interface of the electronic device 210.

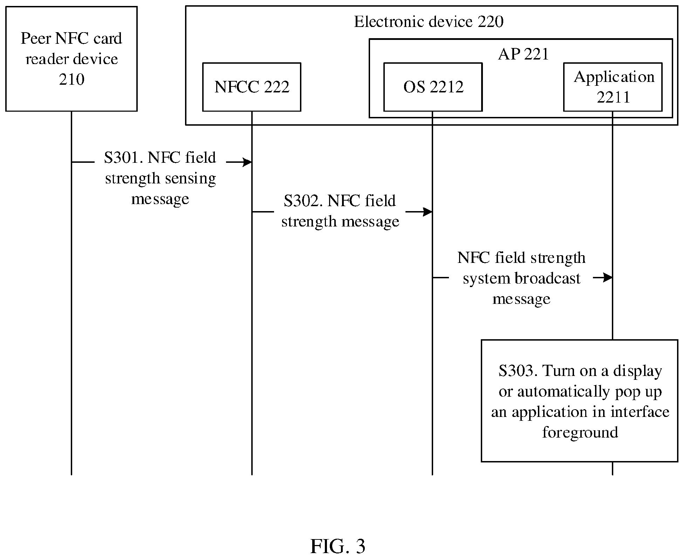

FIG. 3 is a schematic flowchart of a process in which an electronic device automatically pops up an application after receiving an NFC system broadcast message according to an embodiment of this application. As shown in FIG. 3, the process includes the following steps.

S301. When approaching a peer NFC card reader device 210, the electronic device receives an NFC field strength sensing message sent by the peer NFC card reader device 210.

The peer NFC card reader device 210 performs NFC communication with an NFCC 222. A first communication instruction for NFC communication is the NFC field strength sensing message (or may be referred to as an "NFC field-on message"), and the NFCC 222 may sense the NFC field strength message.

In an embodiment, the peer NFC card reader device 210 may further send first indication information and second indication information to the NFCC 222. The first indication information is used to indicate an RF listening mode, and the second indication information is used to indicate identification information of a card in an application.

For example, the peer NFC card reader device 210 may sequentially send the NFC field strength sensing message, the first indication information, and the second indication information to the NFCC 222. The NFCC 222 may send the NFC field strength message to an AP after receiving the NFC field strength sensing message.

In the conventional technology, after receiving the NFC field strength sensing message, the first indication information, and the second indication information, the NFCC 222 reports only the NFC field strength message to the AP 221. The NFCC 222 does not support reporting of the first indication information and the second indication information.

S302. The NFCC 222 sends the NFC field strength message to the AP 221.

For example, after sensing NFC field strength sensing strength, the NFCC 222 may communicate with an OS 2212 on a DH side by using an NCI protocol, to notify the OS 2212 of an NFC field strength event.

After the OS 2212 receives the NFC field strength message sent by the NFCC 222, the OS 2212 sends an NFC field strength system broadcast message to an application 2211.

After receiving the NFC field strength message, the OS 2212 on the DH side sends the NFC field strength system broadcast message.

S303. The AP 221 controls a display to be turned on, or controls the application 2211 to be popped up in interface foreground. When the application 2211 is installed, the application 2211 is registered, and listens to the NFC field strength system broadcast message. After the NFC field strength system broadcast message sent by the OS 2212 is received, the AP 221 may control the display to be turned on, or may start the application 2211 for running in interface foreground after the display is turned on.

In an embodiment, it is common for the electronic device to use an application of a manufacturer of the electronic device as a default application, and when receiving the NFC field strength message (in other words, when approaching a card reader), the electronic device automatically pops up the default application.

For example, for a Huawei mobile phone, "Wallet" may be used as a default payment application, and when receiving the NFC field strength message, the electronic device may automatically pop up "Wallet".

For another example, for an iphone, "Apple Pay" may be used as a default payment application, and when receiving the NFC field strength message, the electronic device may automatically pop up "Apple Pay".

In this embodiment of this application, description is provided by using an example in which the application 2211 is "Wallet". "Wallet" may include a plurality of virtual cards, for example, a public transportation card, a bank card, an access card, and an identity card. Each card may correspond to one unique AID. The electronic device may store a correspondence between cards in a plurality of applications and AIDs in an SE 223. The electronic device may activate one card. For example, Table 1 shows the correspondence between cards in a plurality of applications and AIDs.

**Table 1**

| Application | Type of a card | AID | Activation status |
|---|---|---|---|
| Wallet | Chang'an card | AID 1 | Activate |
| | Shenzhen card | AID 2 | Inactive |
| | Shanghai public transportation card | AID 3 | Inactive |
| Google Pay | Bank card | AID 4 | Inactive |
| ICBC | Interconnection card | AID 5 | Inactive |
| ... | ... | ... | ... |

For example, the correspondence, stored in the SE, between cards in a plurality of applications and AIDs may further include previous consumption information and balance information of each card. Refer to Table 2.

**Table 2**

| Application | Type of a card | AID | Activation status | Previous consumption information | Balance information |
|---|---|---|---|---|---|
| Wallet | Chang'an card | AID 1 | Activated | CNY 1 | CNY 20 |
| | Shenzhen card | AID 2 | Inactive | CNY 2 | CNY 27 |
| | Shanghai public transportation card | AID 3 | Inactive | CNY 1 | CNY 15 |
| Google Pay | Bank card | AID 4 | Inactive | CNY 500 | CNY 1000 |
| ICBC | Interconnection card | AID 5 | Inactive | CNY 300 | CNY 2000 |
| ... | ... | ... | ... | ... | ... |

It should be understood that in FIG. 2, description is provided by using an example in which the electronic device includes one SE. The electronic device may alternatively include a plurality of SEs, and each SE stores a correspondence between a card in an application and an AID. In each SE, one AID may be in an active state, and another AID may be in an inactive state. When the electronic device stores a plurality of SEs, the NFCC may store a routing table. After the peer NFC card reader device sends information about an AID, the NFCC may find a corresponding SE by using the routing table, and send the information about the AID to the corresponding SE. If the AID is an AID activated by the corresponding SE, the SE may modify the information corresponding to the AID, for example, fee deduction information and balance information. After performing a related operation, the SE may send an indication to the NFCC, to indicate that the SE completes the related operation. The NFCC may forward the indication to the peer NFC card reader device, and the peer NFC card reader device may perform a corresponding operation. For example, the peer NFC card reader device opens a gate, or prompts a user with information indicating that card swiping succeeds.

If the AID is not an AID activated by the corresponding SE, the SE may not perform a related operation, the SE may not send an indication to the NFCC, the NFCC may not send the indication to the peer NFC card reader device, or the peer NFC card reader device does not perform a corresponding operation such as opening a gate or prompting a user with information indicating that card swiping succeeds.

The SE in the electronic device may store a correspondence between cards in a plurality of applications and AIDs. Some applications may not include cards, for example, a door control application and a treadmill application. Only one of a plurality of AIDs stored in the SE may be in the active state. For example, the "Chang'an card" in Table 1 is in the active state. When taking a bus in Xi'an, the user may enable an NFC function of a mobile phone, and move the mobile phone to approach a bus gate, and then the user may swipe a card to get on the bus. When the user takes a subway in Shenzhen, and the user moves the mobile phone to approach a subway gate, the mobile phone automatically pops up "Wallet", and displays a default card, namely, a "Chang'an card". In this case, the user needs to manually perform switching to a "Shenzhen transportation card", and then may swipe the card to enter a station. In this case, the mobile phone automatically pops up an incorrect card, and the user needs to perform manual switching. Consequently, the user performs a cumbersome operation, resulting in relatively poor user experience.

It should be understood that when the mobile phone detects that the user performs switching from the "Chang'an card" to the "Shenzhen transportation card", "Wallet" may send an instruction to an SE in the mobile phone, to indicate the SE to activate the "Shenzhen transportation card" and deactivate the "Chang'an card". After the SE activates the "Shenzhen transportation card", the user may swipe the card to enter the station.

When the user is using a treadmill and needs to transmit data of the treadmill to the mobile phone, the user may move the mobile phone to approach a treadmill card reader. In this case, the mobile phone automatically pops up "Wallet", and displays the default card, namely, the "Chang'an card", and only after the user manually performs switching to a treadmill application, the mobile phone may perform NFC communication with the treadmill, and the treadmill may send exercise data of the user to the treadmill application on a side of the mobile phone.

When the user moves the mobile phone to approach another mobile phone for which an NFC function is enabled, the mobile phone may still automatically pop up "Wallet", and display the default card, namely, the "Chang'an card". However, in this case, the user does not expect the mobile phone to pop up "Wallet", and the user further needs to close "Wallet" to perform a next operation.

In the foregoing cases, when the user takes a subway in Shenzhen, and the user moves the mobile phone to approach the subway gate, the mobile phone automatically pops up the "Chang'an card" in "Wallet" for the user. However, the "Chang'an card" is not a public transportation card type expected by the user. Alternatively, when the user is using the treadmill, and the user moves the mobile phone to approach the treadmill card reader, the mobile phone automatically pops up the "Chang'an card" in "Wallet" for the use. However, in this case, the user does not expect "Wallet" to be popped up. Alternatively, when the user moves the mobile phone to approach the another mobile phone for which the NFC function is enabled, the mobile phone automatically pops up the "Chang'an card" in "Wallet" for the user. However, in this case, the user does not expect "Wallet" to be popped up. In all of these cases, user experience is affected when the NFC function is used.

A reason for the foregoing problem is as follows: When approaching the card reader, the electronic device receives a field strength sensing message sent by the peer NFC card reader device. The NFCC sends only the NFC field strength message to the OS, in other words, the NFCC reports only the NFC field strength message to the OS. However, the OS cannot identify a type of the peer NFC card reader device based on the NFC field strength message, and after receiving the NFC field strength message, the operating system of the electronic device sends an NFC field strength system broadcast message to "Wallet". Consequently, the electronic device pops up an incorrect card in "Wallet", or unintentionally pops up a card.

In this embodiment of this application, in a process in which the electronic device performs NFC communication with the peer card reader device, the NFC controller may report an instruction flow to the operating system, and the operating system may determine the type of the peer NFC card reader device based on a feature of the instruction flow. Alternatively, after the NFC controller receives information sent by the peer card reader device, the NFC controller determines the type of the peer NFC card reader device, and reports the type to the operating system. The operating system may determine, based on the type of the peer NFC card reader device, to run a service-related application. In this way, better user experience can be brought to the user.

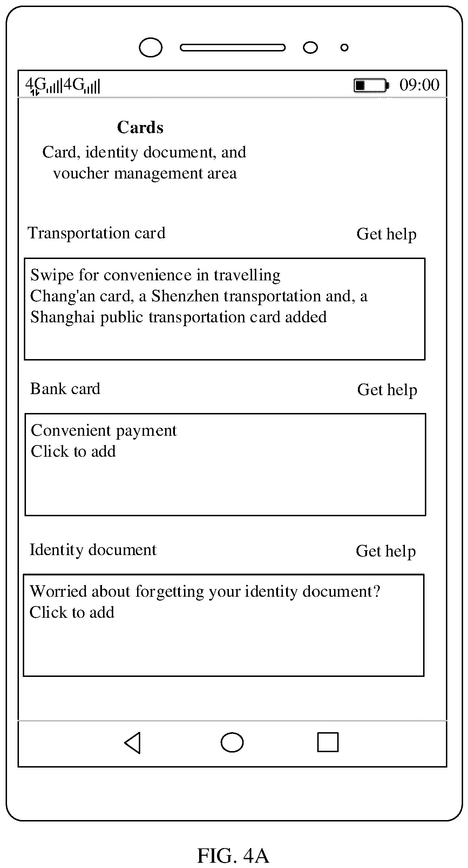

FIG. 4A to FIG. 4D show a set of graphical user interfaces (graphical user interface, GUI) according to an embodiment of this application.

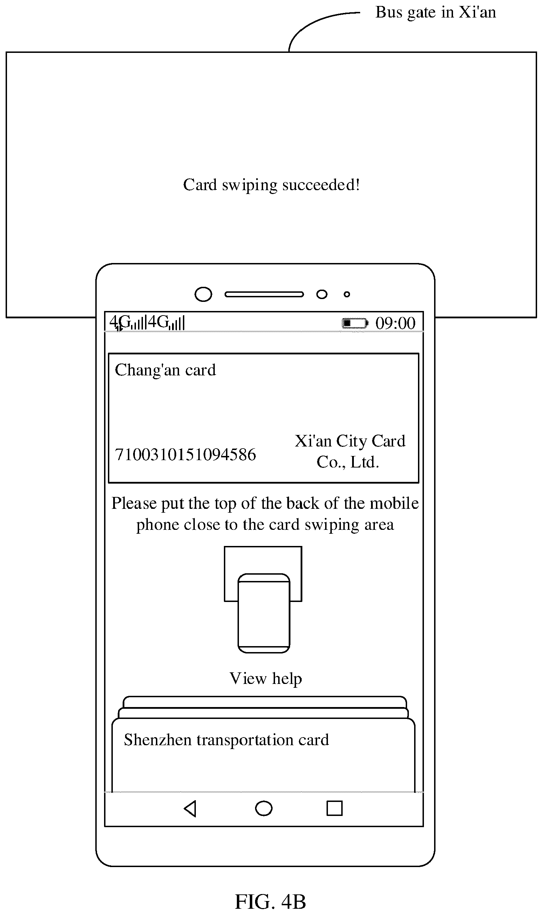

A GUI shown in FIG. 4A is a display interface of "Wallet". On the display interface, "Wallet" includes a transportation card, a bank card, a key, an identity document, a membership card, and the like. The transportation card may include a Chang'an card, a Shanghai public transportation card, a Shenzhen transportation card, and the like activated by a user. On a GUI shown in FIG. 4B, the user may set the Chang'an card as a default public transportation card. In this case, in an SE, the Chang'an card is in an active state, and another card is in an inactive state.

The GUI shown in FIG. 4B is an interface of a payment made through card swiping. When taking a bus in Xi'an, the user may move a mobile phone to approach a bus gate in Xi'an. In this case, information, namely, "card swiping succeeded!", is displayed on the gate, and a card swiping interface of the Chang'an card may be displayed on the mobile phone.

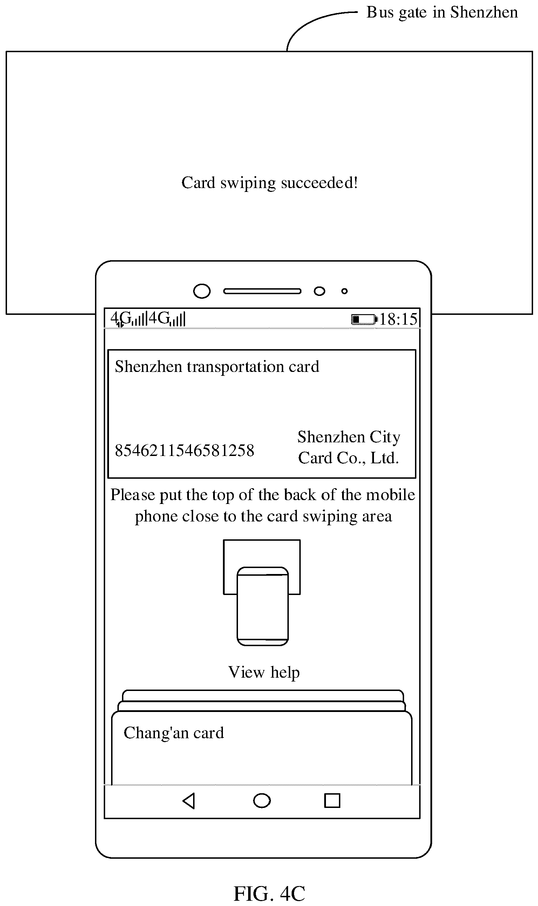

A GUI shown in FIG. 4C is another interface of a payment made through card swiping. When taking a bus in Shenzhen, the user may move the mobile phone to approach a bus gate in Shenzhen. In this case, information, namely, "card swiping succeeded!", is displayed on the gate, and a card swiping interface of the Shenzhen transportation card may be displayed on the mobile phone.

It should be understood that when the user takes a bus in Shenzhen, the default public transportation card in "Wallet" in the mobile phone is still the Chang'an card in this case. Therefore, when the mobile phone approaches the bus gate in Shenzhen, the mobile phone may determine that a type of a peer NFC card reader device is the bus gate in Shenzhen. In this case, "Wallet" in the mobile phone may indicate the SE to activate the Shenzhen public transportation card in "Wallet", so that the user can swipe the card to get on the bus. In this process, it is required that the mobile phone is turned on and an NFC function is enabled.

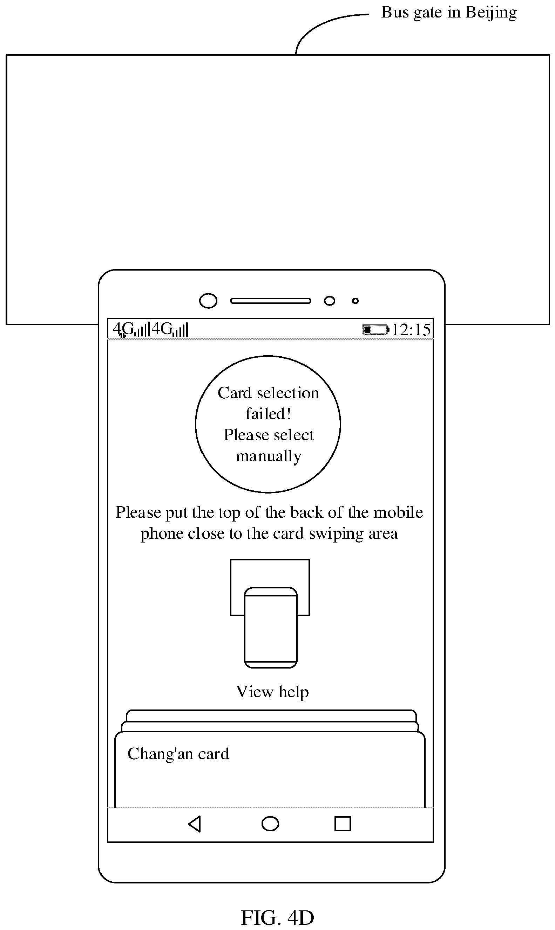

A GUI shown in FIG. 4D is another interface of a payment made through card swiping. When taking a bus in Beijing, the user may move the mobile phone to approach a bus gate in Beijing. In this case, information, namely, "card selection failed. Please select manually!", is displayed on the gate.

It should be understood that before the user takes a bus in Beijing, a Beijing public transportation card is not activated in the mobile phone of the user. Therefore, after the mobile phone determines that the type of the peer NFC card reader device is the bus gate in Beijing, the public transportation card cannot be automatically switched. In this case, the mobile phone may prompt the user to manually select the card. After the user manually activates the Beijing public transportation card, the user may swipe the card to get on the bus.

In this embodiment of this application, an electronic device may identify the type of the peer NFC card reader device. Therefore, the mobile phone may perform automatic card switching based on the type of the device, and automatically activate a card currently corresponding to the peer NFC card reader device, to avoid a cumbersome operation performed by the user when using the card. This helps improve user experience.

It should be understood that in this embodiment of this application, "Wallet" may include a plurality of types of cards, for example, a bank card, a public transportation card, an identity document, and a membership card. The foregoing description is merely provided by using a public transportation card as an example.

In an embodiment, in addition to "Wallet", the mobile phone may further include another application, for example, "Google Pay". "Google Pay" may also include a public transportation card, a bank card, and the like. When a public transportation card to be used by the user is in "Google Pay", after the mobile phone determines the type of the peer NFC card reader device, the mobile phone may automatically activate the public transportation card in "Google Pay".

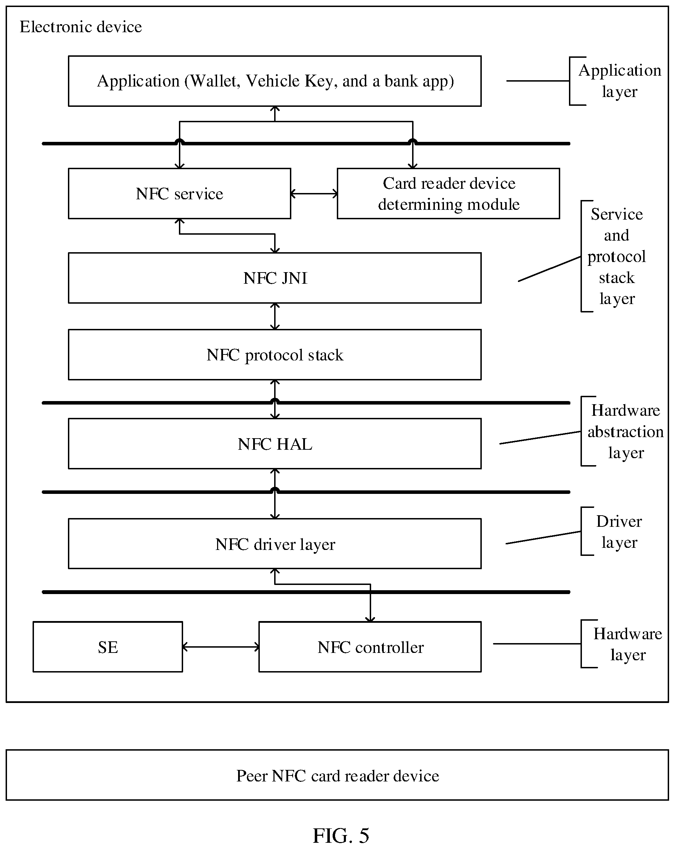

FIG. 5 is a schematic diagram of another system architecture according to an embodiment of this application. An operating system includes an NFC driver layer (NFC driver), an NFC hardware abstraction layer (NFC hardware abstraction layer, NFC HAL), an NFC protocol stack, an NFC Jave native interface (NFC Jave native interface, NFC JNI), an NFC service (NFC service), and a card reader device determining module. In comparison with FIG. 2, the card reader device determining module is added to the operating system in FIG. 5, and the module may be used by the operating system to determine a type of a peer NFC card reader device.

After an electronic device approaches the peer NFC card reader device, and an NFC controller communicates with the peer NFC card reader device based on an NFC wireless communications protocol, an ordered NCI instruction flow is generated and sent to the operating system. The card reader device determining module in the operating system may determine the type of the peer NFC card reader device based on the instruction flow. In implementation of a current technical solution, after the NCI instruction flow is uploaded to the NFC HAL by the NFC controller, the NCI instruction flow is not continuously uploaded to the NFC service. The NFC service is a unit for interacting with an application, and the NFC service determines whether to run an application in foreground when receiving an NFC field strength message. In this embodiment of this application, after receiving the NCI instruction flow, the NFC HAL may continue to upload the NCI instruction flow to the NFC service, and the NFC service sends the NCI instruction flow to the card reader device determining module for determining the type of the peer NFC card reader device.

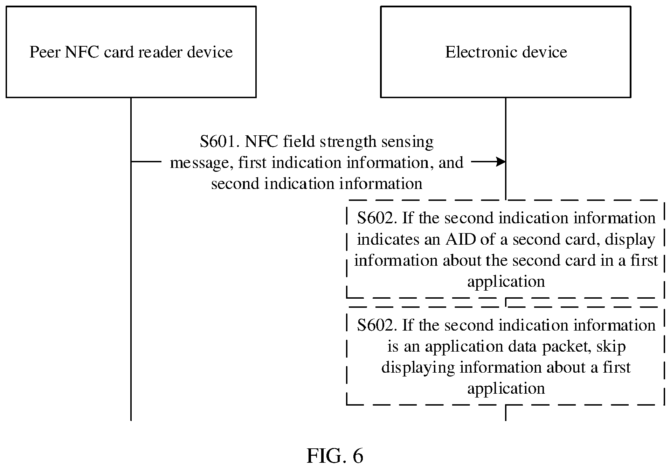

FIG. 6 is a schematic flowchart of a near field communication method 600 according to an embodiment of this application. The method 600 is applicable to the system shown in FIG. 5. An application processor includes one or more applications, and the one or more applications include a first application. The first application includes a first card and a second card. The first card is an activated card. The second card is a card that is not activated. As shown in FIG. 6, the method includes the following steps.

S601. When an electronic device approaches a peer NFC card reader device, the peer NFC card reader device sends an NFC field strength sensing message, first indication information, and second indication information to the electronic device, where the first indication information is used to indicate a first RF listening mode, and the second indication information is used to indicate an application identifier AID of the second card, or the second indication information is an application data packet, the application data packet includes data generated by the peer NFC card reader device and a second application, and the application data packet does not include information about any AID.

In an embodiment, the first RF listening mode is an NFC A PASSIVE listening mode.

It should be understood that if the first indication information is used to indicate the first RF listening mode, after sending the first indication information to the electronic device, the peer NFC card reader device further continues to send the second indication information to the electronic device. The second indication information may indicate application identification information (for example, an AID) of an application (for example, the first application) in the electronic device. Alternatively, the second indication information may be an application data packet, and the application data packet includes the data generated by the peer NFC card reader device and the second application.

For example, if the second card is a Shenzhen public transportation card, and the card reader device is a bus gate or subway gate in Shenzhen, the second indication information may be carried in an application selection message and sent to the electronic device. The application selection message carries the second indication information.

For example, if the card reader device is a gate of a treadmill, the gate of the treadmill sends an application data packet to the electronic device, and the application data packet does not carry information about an AID.

In an embodiment, if the first indication information indicates a second listening mode, the electronic device may determine that a peer device is not the peer NFC card reader device, and may be another electronic device for which an NFC function is enabled.

For example, the second listening mode may be any one of an NFC_F_PASSIVE listening mode, an NFC_A_ACTIVE listening mode, or an NFC_F_ACTIVE listening mode.

S602. If the second indication information indicates the application identifier of the second card, the electronic device executes a transaction with the card reader device by using the second card, and automatically displays information about the second card in the first application; or if the second indication information is the application data packet, the electronic device does not automatically pop up any application.

It should be understood that the first application may be a default application (for example, "Wallet" in a Huawei mobile phone) in the electronic device, or may not be a default application in the electronic device. This is not limited in this embodiment of this application.

"Wallet" is used as an example. "Wallet" includes an AID list, and the AID list is information that is notified by "Wallet" to an NFC service network element for recording and storage. The AID list is updated each time a new card is added to or a card is deleted from "Wallet".

As shown in FIG. 4B, when a mobile phone approaches a bus gate in Xi'an, the bus gate in Xi'an may send first indication information and second indication information to the mobile phone. The second indication information indicates an AID of a Chang'an card. Therefore, the mobile phone may automatically complete a transaction when approaching a card reader.

As shown in FIG. 4C, when the mobile phone approaches a bus gate in Shenzhen, the bus gate in Shenzhen may send first indication information and second indication information to the mobile phone. The second indication information indicates an AID of a Shenzhen transportation card. Therefore, when approaching a card reader, the mobile phone may first automatically perform a card switching operation to activate the Shenzhen transportation card, and then automatically complete a transaction.

A process in which the electronic device determines a type of the peer NFC card reader device is described below in detail.

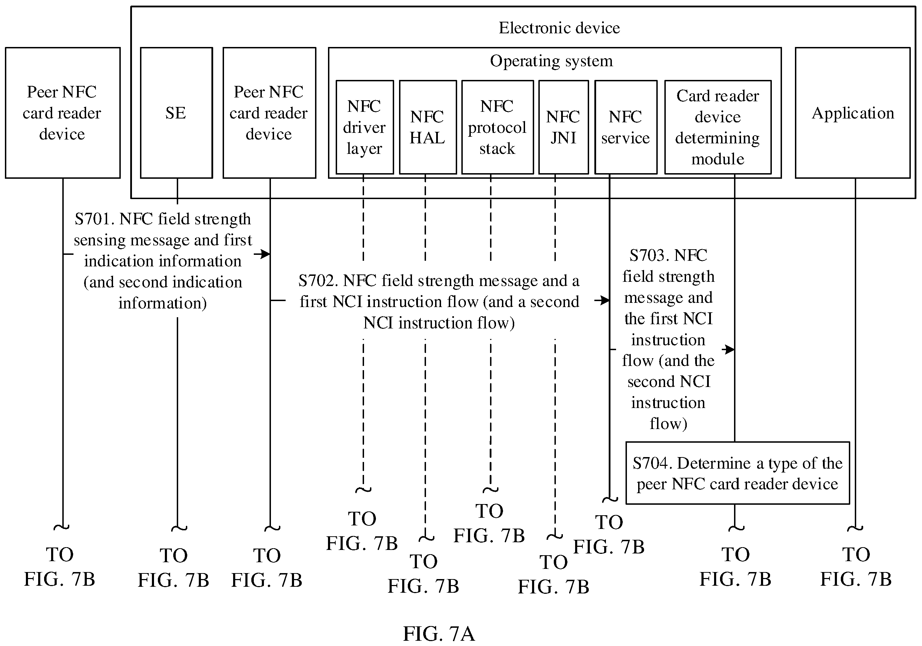

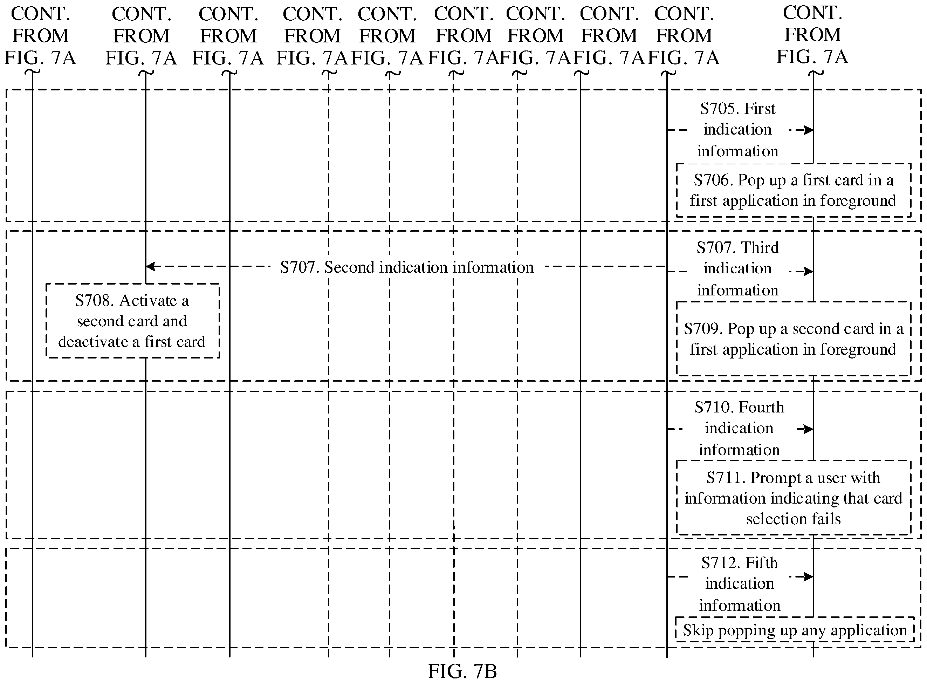

FIG. 7A and FIG. 7B are a schematic flowchart of a near field communication method 700 according to an embodiment of this application. The method may be implemented by an NFCC, an operating system, and an application in an electronic device. As shown in FIG. 7A and FIG. 7B, the method 700 includes the following steps.

S701. The NFCC receives an NFC field strength sensing message and first indication information that are sent by a peer NFC card reader device.

In an embodiment, if the first indication information indicates a first RF listening mode, the NFCC further receives second indication information.

In this embodiment of this application, the NFCC may sequentially receive the NFC field strength sensing message, the first indication information, and the second indication information. In other words, the peer NFC card reader device may send the NFC field strength sensing message, the first indication information, and the second indication information to the NFCC in a sequence of the NFC field strength sensing message, the first indication information, and the second indication information.

For example, the first indication information may be carried in a radio frequency interface activation message.

For example, if the peer NFC card reader device is a bus gate or a subway gate in Shenzhen, the second indication information may be carried in an application selection message and sent to the NFCC.

For example, if the peer NFC card reader device is a card reader device of a treadmill, the second indication information may be carried in an application data packet.

S702. The NFCC sends the NFC field strength message and a first NCI instruction flow to an NFC service.

In an embodiment, if the first NCI instruction flow indicates the first RF listening mode, the NFC service may further receive a second NCI instruction flow sent by the NFCC. Information carried in the second NCI instruction flow may be the same as the second indication information.

It should be understood that the NFCC may first send the NFC field strength message and the first NCI instruction flow or the NFC field strength message, the first NCI instruction flow, and the second NCI instruction flow to an NFC driver; the NFC driver then transparently transmits the NFC field strength message and the first NCI instruction flow or the NFC field strength message, the first NCI instruction flow, and the second NCI instruction flow to an NFC HAL; the NFC HAL then transparently transmits the NFC field strength message and the first NCI instruction flow or the NFC field strength message, the first NCI instruction flow, and the second NCI instruction flow to an NFC protocol stack; the NFC protocol stack then transparently transmits the NFC field strength message and the first NCI instruction flow or the NFC field strength message, the first NCI instruction flow, and the second NCI instruction flow to an NFC JNI; and then the NFC JNI transparently transmits the NFC field strength message and the first NCI instruction flow or the NFC field strength message, the first NCI instruction flow, and the second NCI instruction flow to the NFC service.

In the conventional technology, after the NFC field strength message and the first NCI instruction flow or the NFC protocol stack, the first NCI instruction flow, and the second NCI instruction flow are transparently transmitted to the NFC HAL, the NFC HAL transparently transmits only the NFC protocol stack to the NFC protocol stack, and does not transparently transmit the corresponding NCI instruction flow. Consequently, the NFC service cannot determine a type of the peer NFC card reader device based on the NFC field strength message, and therefore after receiving the NFC field strength message, indicates an application to pop up in foreground.

In this embodiment of this application, the first NCI instruction flow and the second NCI instruction flow may be reported by using a private interface, or the first NCI instruction flow and the second NCI instruction flow may be added to an existing NCI protocol.

S703. The NFC service sends the NFC field strength message and the first NCI instruction flow to a card reader device determining module.

In an embodiment, if the first NCI instruction flow indicates the first RF listening mode, the card reader device determining module may further receive the second NCI instruction flow sent by the NFCC.

S704. The card reader device determining module determines the type of the peer NFC card reader device based on the NFC field strength message and the first NCI instruction flow; or the card reader device determining module determines the type of the peer NFC card reader device based on the NFC field strength message, the first NCI instruction flow, and the second NCI instruction flow.

S705. If the card reader device determining module determines that an AID carried in the second instruction flow is an AID of a first card in a first application in the electronic device, where the first card is a default card, the card reader device determining module sends first indication information to the first application, where the first indication information is used to indicate that the type of the peer NFC card reader device is related to the first card in the first application.

S706. The first card in the first application in the electronic device is automatically popped up in foreground.

In an embodiment, the first application may also be a default application (for example, "Wallet") in the electronic device. An AID list of activated cards in the default application in the electronic device may be stored. The card reader device determining module may obtain the corresponding AID list from the default application during determining. If the first NCI instruction flow received by the card reader device determining module indicates the first RF listening mode, and the AID indicated in the second NCI instruction flow is an AID that corresponds to a card in an application and that is stored in the electronic device, the card reader device determining module indicates the application to pop up, or indicates the default application not to pop up in foreground.

For example, the default application in the electronic device is "Wallet", and activated cards in "Wallet" include a Chang'an card, a Shenzhen transportation card, and a Shanghai public transportation card. An AID of the Chang'an card is an AID 1, an AID of the Shenzhen transportation card is an AID 2, and an AID of the Shanghai public transportation card is an AID 3.

If the first NCI flow indicates the first RF listening mode, and the second NCI flow indicates the AID 1, the card reader device determining module may determine that the type of the peer NFC card reader device is a bus or subway gate in Xi'an, and may indicate that the peer NFC card reader device is related to the Chang'an card in "Wallet". In this case, the first indication information may carry the AID 1.

In an embodiment, the electronic device may further automatically display consumption information, balance information, and the like of the card on an interface. For example, as shown in FIG. 4B, information, namely, "CNY 1 is consumed this time, and the balance is CNY 19.", about the public transportation card is displayed on an interface of a mobile phone.

It should be understood that after receiving the second NCI instruction flow, the NFCC may determine that the carried AID is the AID 1, and the NFCC may send the AID 1 to an SE (the electronic device may include only one SE, or when there are a plurality of SEs, the NFCC sends the AID to a corresponding SE by using a stored routing table). In an AID list stored in the SE, the AID 1 is in an active state. In this case, the SE may modify information corresponding to the AID 1, for example, fee deduction information and balance information of the Chang'an card. After performing a corresponding operation, the SE may further communicate with the peer NFC card reader device by using the NFCC, for example, send an indication to the peer NFC card reader device by using the NFCC, for example, to indicate a fee deduction success and the balance information to the peer NFC card reader device. After the peer NFC card reader device receives the indication, the peer NFC card reader device may display information, namely, "card swiping succeeded! CNY 1 is consumed this time, and the balance is CNY 19.". The foregoing may be a transaction process between the electronic device and the peer NFC card reader device.

After the transaction process is performed, the SE may further report transaction information, for example, the fee deduction information and the balance information, to the NFC service. After the NFC service sends the corresponding transaction information to the application, the application may display the transaction information to a user.

It should be further understood that for different cards, one or more pieces of information may be required for communication between the peer NFC card reader device and the SE. This is not limited in this embodiment of this application.

It should be further understood that in this embodiment of this application, there is no actual sequence between the transaction process between the electronic device and the peer NFC card reader device and a process of automatically popping up the card in the electronic device in foreground.

S707. If the card reader device determining module determines that an AID carried in the second instruction flow is an AID of a second card in activated cards in a first application in the electronic device, where the second card is not a default card, the card reader device determining module sends second indication information to an SE, to indicate the SE to activate the second card, and the card reader device determining module sends third indication information to the first application, to indicate that the type of the peer NFC card reader device is related to a first card in the first application.

S708. The SE activates the second card in an AID list stored in the SE, and deactivates the first card.

S709. The second card in the first application in the electronic device is automatically popped up in foreground.

In an embodiment, the card reader device determining module may first obtain, from the first application, the AID list corresponding to the cards activated by a user by using the first application. In the AID list, an AID corresponding to the first card is in an active state, and an AID corresponding to another card is in an inactive state. The card reader device determining module may determine whether the AID of the second card is in the AID list. If the AID of the second card is in the AID list, and the AID of the second card is in the inactive state, the card reader device determining module sends the second indication information to the SE.

For example, if the first NCI flow indicates the first RF listening mode, and the second NCI flow indicates the AID 2, the card reader device determining module may determine that the type of the peer NFC card reader device is a bus or subway gate in Shenzhen. In this case, the card reader device determining module may first indicate the SE to activate the Shenzhen transportation card and deactivate the Chang'an card, and then may indicate to the application that the peer NFC card reader device is related to the Shenzhen transportation card in "Wallet". In this case, the indication information may carry the AID 2.

For example, as shown in FIG. 4C, a default card in a mobile phone is the Chang'an card. When the user takes a bus in Shenzhen, and the mobile phone approaches a bus gate, the mobile phone may identify that a type of the gate is related to the Shenzhen transportation card in "Wallet", and the mobile phone may automatically activate the Shenzhen transportation card, and deactivate the Chang'an card. In this case, the user may normally perform a card swiping operation, and the user does not need to manually switch the public transportation card, thereby improving user experience.

It should be understood that if the default application in the electronic device is the first application, and the AID carried in the second instruction flow is an AID of an activated third card in a second application, the card reader device determining module sends indication information to the SE, to indicate the SE to activate the third card and deactivate the first card, and the card reader device determining module sends indication information to the second application, to indicate that the type of the peer NFC card reader device is related to the third card in the second application. The second application in the electronic device may be automatically popped up in foreground.

For example, if the first NCI flow indicates the first RF listening mode, and the second NCI flow indicates an AID 4, the card reader device determining module may determine that the type of the peer NFC card reader device is related to a bank card in "Google Pay". In this case, the card reader device may first indicate the SE to activate the bank card and deactivate the Chang'an card, and then may further indicate to "Google Pay" that the peer NFC card reader device is related to the bank card in "Google Pay". In this case, the indication information may carry the AID 4. The electronic device may automatically pop up the bank card in "Google Pay" in foreground.

In an embodiment, the electronic device may further automatically display consumption information, balance information, and the like of the card on an interface. For example, as shown in FIG. 4C, information, namely, "CNY 2 is consumed this time, and the balance is CNY 25.", about the public transportation card is displayed on an interface of the mobile phone.

It should be understood that after receiving the second NCI instruction flow, the NFCC may determine that the carried AID is the AID 2, and the NFCC may send the AID 2 to the SE (the electronic device may include only one SE, or when there are a plurality of SEs, the NFCC sends the AID to the corresponding SE by using a stored routing table). In the AID list stored in the SE, the AID 2 is in the inactive state. In this case, the SE may not perform any processing on information corresponding to the AID 2.

When determining that the AID 2 is not the default card in the first application, the card reader device determining module may indicate the SE to activate the Shenzhen transportation card. After activating the Shenzhen transportation card, the SE may modify the information corresponding to the AID 2, for example, fee deduction information and balance information of the Shenzhen transportation card. After performing a corresponding operation, the SE may further communicate with the peer NFC card reader device by using the NFCC, for example, send an indication to the peer NFC card reader device by using the NFCC, for example, to indicate a fee deduction success and the balance information to the peer NFC card reader device. After the peer NFC card reader device receives the indication, the peer NFC card reader device may display information, namely, "card swiping succeeded! CNY 2 is consumed this time, and the balance is CNY 25.".

It should be further understood that in this embodiment of this application, when the card reader device determining module indicates the SE to activate the Shenzhen transportation card, the indication information may be sent to the SE by using the NFC service, the NFC JNI, the NFC protocol stack, the NFC HAL, the NFC driver, and the NFCC. In an embodiment, the electronic device may automatically activate the second card and deactivate the first card. Alternatively, the electronic device may prompt, by using a display, the user to select a card that needs to be switched to. For example, if the card reader device determining module determines that the second card is not an activated card in the AID list but is an AID corresponding to an activated card in the first application, the card reader device determining module may add the AID of the second card to the indication information sent to the first application. The first application may remind the user whether to perform switching to the second card. If the user determines to perform switching to the second card, the application sends a card switching indication to the SE by using a network element such as the NFC service or the NFCC. After receiving the indication, the SE may activate the second card and deactivate the first card.

S710. If the card reader device determining module determines that an AID carried in the second instruction flow is not an AID of any one of activated cards in the electronic device, the card reader device determining module sends fourth indication information to an application, to indicate that the type of the peer NFC card reader device is unrelated to any one of the activated cards in the application in the electronic device.

S711. The electronic device prompts the user with information indicating that automatic card selection fails.

For example, if the first NCI flow indicates the first RF listening mode, and the second NCI flow indicates an AID 6, the card reader device determining module may determine that the type of the peer NFC card reader device is a bus or subway gate in Beijing, and may indicate that the peer NFC card reader device is related to a Beijing public transportation card in "Wallet". In this case, the indication information may carry the AID 6.

For example, as shown in FIG. 4D, when a default card in a mobile phone is a Chang'an card, and the Beijing public transportation card is not activated in the mobile phone, and when the user takes a bus in Beijing, the mobile phone may automatically pop up a reminder box, to remind the user of information, namely, "card selection failed. Please select manually!".

It should be understood that in this case, the card reader device determining module may store a complete AID list. The AID list may include information about an AID of each of the activated cards in the electronic device and information about another AID of a card that is not activated in the electronic device. In this case, when further obtaining an AID of a card that is not activated in the electronic device, the card reader device determining module may determine that the AID is not an AID of any one of the activated cards in the electronic device, and may further determine that the AID is an AID of a card that is not activated in an application in the electronic device. In this case, the card reader device determining module may indicate to pop up prompt information, namely, "card selection failed. Please select manually!", and may further provide an entry to a card activation interface of the card corresponding to the AID for the user. After viewing the entry, the user may first enter the card activation interface to activate the card, and then execute a transaction.

In an embodiment, an entry for purchasing the Beijing public transportation card may be further displayed on a display interface of the mobile phone in FIG. 4D, so that the user can conveniently enter a card activation interface of the Beijing public transportation card by using the entry.

In an embodiment, on the display interface of the mobile phone in FIG. 4D, there may be further information about a plurality of activated cards in "Wallet", and a Chang'an card, a Shenzhen transportation card, and a Shanghai public transportation card may be displayed. The card reader device determining module may make an error in determining (at a relatively low probability), and therefore information about the activated card may be displayed for user selection.

S712. If the card reader device determining module determines that the second instruction flow carries no AID, or the card reader device does not receive the second instruction within preset duration, the card reader device determining module sends fifth indication information to an application, to indicate not to automatically pop any application in foreground.

For example, if the first NCI flow indicates the first RF listening mode, and the second NCI instruction flow is a data packet, the card reader device determining module may determine that the type of the peer NFC card reader device is unrelated to "Wallet", and may indicate to the application that the peer NFC card reader device is unrelated to "Wallet".

If the first NCI flow indicates the first RF listening mode, the card reader device determining module may determine that the type of the peer NFC card reader device is another NFC device, and may indicate to the application that the peer NFC card reader device is the another NFC device.

In an embodiment, the NFC service may store AID lists of activated cards in all applications in the electronic device, and the card reader device determining module may obtain a corresponding AID list from the application during determining.

For example, if the first NCI flow indicates the first RF listening mode, and the second NCI flow indicates an AID 5, the card reader device determining module may determine that the type of the peer NFC card reader device is related to an ICBC interconnection card, and may indicate that the peer NFC card reader device is related to the ICBC interconnection card.

In this embodiment of this application, the card reader device determining module added to the operating system may determine the type of the peer card reader device. The type of the device may be related to "Wallet", the application Google Pay, a vehicle key application, or a treadmill application. Alternatively, a peer device is just a mobile device and is not a real card reader or the like. When approaching the card reader device, the electronic device pops up, based on the type of the device, an application related to the card reader device, or does not pop up any application.

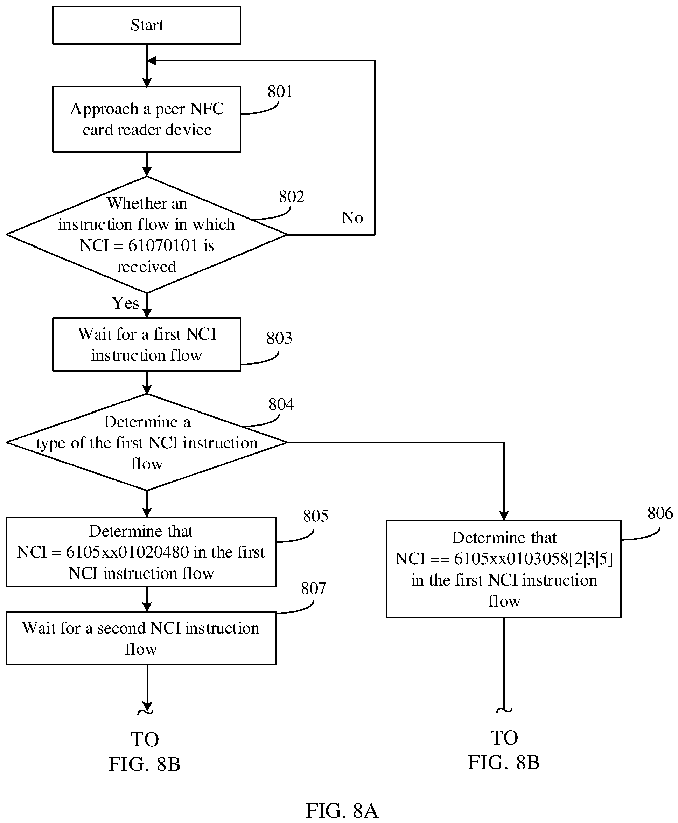

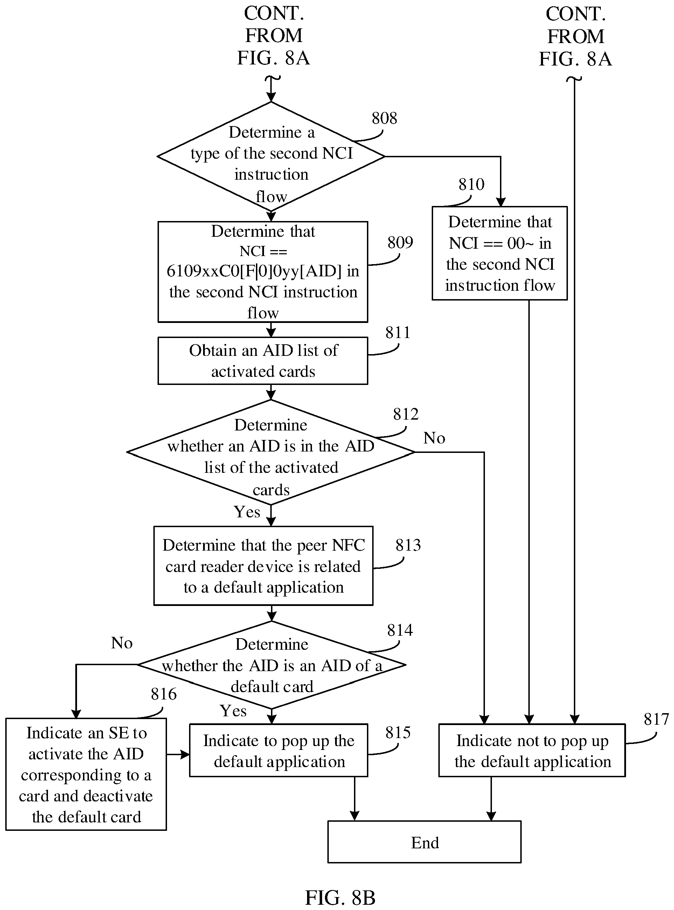

FIG. 8A and FIG. 8B are a schematic flowchart of a determining process of a card reader device determining module according to an embodiment of this application. As shown in FIG. 8A and FIG. 8B, the process includes the following steps.

S801. An electronic device approaches a peer NFC card reader device.

S802. The card reader device determining module determines whether an instruction flow in which NCI == 61070101 is received.

It should be understood that the instruction flow in which NCI == 61070101 may be the foregoing NFC field strength message.

If the instruction flow in which NCI == 61070101 is not received, after the electronic device approaches the NFC card reader device, the card reader device determining module continues to wait for receiving the instruction flow in which NCI == 61070101NCI.

S803. If receiving the instruction flow in which NCI == 61070101, the card reader device determining module waits for a first NCI instruction flow.

S804. After the card reader device determining module receives the first NCI instruction flow, the determining module determines a type of the first NCI instruction flow.

S805. If determining that NCI == 6105xx01020480 in the first NCI instruction flow, the card reader device determining module performs S807.

It should be understood that NCI == 6105xx01020480 is an NFC RF activation notification message. Herein, 6105 is a type definition of the RF activation notification message, xx represents a length of the following bytes, and 01020480 represents a specific RF listening mode, and may be an NFC_A_PASSIVE listening mode herein.

In this embodiment of this application, an example in which a default application is "Wallet" is used. When the card reader device determining module determines that the listening mode is the NFC_A_PASSIVE listening mode, the card reader device determining module may determine that the peer NFC card reader device is related to "Wallet". On the contrary, if the card reader device determining module determines that the listening mode is not the NFC_A_PASSIVE listening mode, the card reader device determining module may determine that the peer NFC card reader device is unrelated to "Wallet".

It should be understood that the first listening mode is not specifically limited. For example, when the peer NFC card reader device is a card reader device related to a non-default application in the electronic device, the card reader device determining module does not necessarily perform S807 after determining that the listening mode is the NFC_A_PASSIVE listening mode, or may perform S807 after determining that the listening mode is another listening mode.

S806. If determining that NCI == 6105xx0103058[2|3|5] in the first NCI instruction flow, the card reader device determining module performs S817.

It should be understood that the NCI == 6105xx0102048 [2|3|5] is another NFC RF activation notification message. Herein, 6105 is a type definition of the RF activation notification message, xx represents a length of the following bytes, and 0102048[2|3|5] may represent any one of 01020482, 01020483, or 01020485, and represents a specific RF listening mode. Herein, 01020482 may represent an NFC_F_PASSIVE listening mode, 01020483 may represent an NFC_A_ACTIVE listening mode, and 01020485 may represent an NFC_F_ACTIVE listening mode.

S807. If receiving the first NCI instruction flow in which NCI == 6105xx01020480, the card reader device determining module waits for a second NCI instruction flow.

S808. After the card reader device determining module receives the second NCI instruction flow, the card reader determining module determines a type of the second NCI instruction flow.

S809. If determining that NCI == 6109xxC0[F|0]0yy[AID] in the second NCI instruction flow, the card reader device determining module performs S811.

S810. If determining that NCI == 00- in the second NCI instruction flow, the card reader device determining module performs S817.

S811. The card reader device determining module obtains an AID list of activated cards in a default application.

For example, if the default application in the electronic device is "Wallet", the card reader device determining module obtains an AID list of activated cards in "Wallet".

S812. Determine whether an AID, in the second NCI instruction flow, obtained in S809 is in the AID list of the activated cards in the default application.

S813. If the AID, in the second NCI instruction flow, obtained in S809 is in the AID list of the activated cards in the default application, determine that the peer NFC card reader device is related to the default application, and perform S814.

Alternatively, if the AID, in the second NCI instruction flow, obtained in S809 is not in the AID list of the activated cards in the default application, it is determined that the peer NFC card reader device is unrelated to the default application, and S817 is performed.

S814. The card reader device determining module determines whether a card corresponding to the AID is a default card in the default application.

If determining that the card corresponding to the AID is the default card in the default application, the card reader device determining module performs S815.

If determining that the card corresponding to the AID is not the default card in the default application, the card reader device determining module performs S816.

S815. Indicate to pop up the default application.

S816. The application indicates an SE to activate the card corresponding to the ADI and deactivate the default card, and then performs S815.

In this embodiment of this application, an AID value is obtained by parsing the second NCI instruction flow, and the value is an AID selected by the peer NFC card reader device. The currently obtained AID may be compared with an AID currently activated by the default application (for example, "Wallet"). If the AID is not the AID currently activated by "Wallet" but is an AID of a card in the activated cards, AID switching is immediately performed. Automatic AID switching is performed, and therefore there is no need to perform manual card switching, and when the card reader device is approached, card switching and a transaction are automatically completed.

S817. If the card reader device determining module determines that NCI == 6105xx0103058[2|3|5] in the first instruction flow, or if the AID, in the second instruction flow, obtained in S809 is not in the AID list of the activated cards in the default application, the electronic device does not pop up the default application.

If the card reader device determining module determines that NCI == 00- in the second instruction flow, the electronic device may determine that the peer NFC card reader device is related to a host-based card emulation (host-based card emulation, HCE) application, and does not pop up the default application.

In this embodiment of this application, an AID value is obtained by parsing a 6109 NCI instruction. If the AID is not an AID of any one of the activated cards in the default application, or the second instruction flow does not include any information about an AID, the default application is popped up in foreground only when the AID carried in the second NCI instruction flow is related to the default application, to avoid a case in which user experience is affected because an application is unintentionally popped up.

A determining process of the card reader device determining module in this embodiment of this application is described in FIG. 8A and FIG. 8B. The process may be applied to a transportation card, a bank card, a membership card, an identity document, or the like. Another determining process of the card reader device determining module in this embodiment of this application is described below. The process may be applied to determining of an access card.

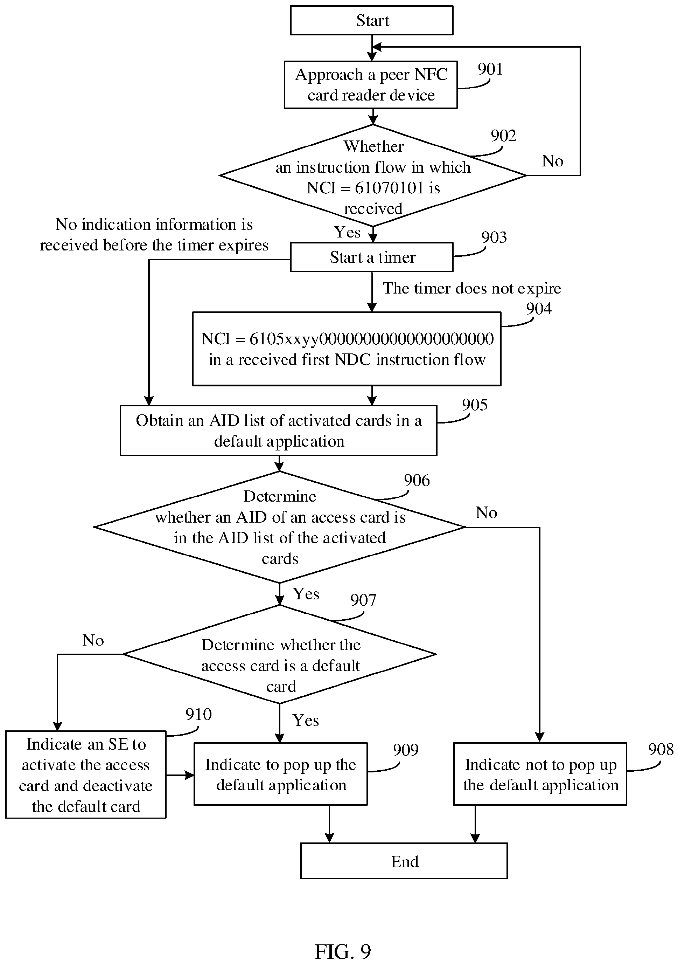

FIG. 9 is another schematic flowchart of a determining process of a card reader device determining module according to an embodiment of this application. As shown in FIG. 9, the process includes the following steps.

S901. An electronic device approaches a peer NFC card reader device.

S902. The card reader device determining module determines whether an instruction flow in which NCI == 61070101 is received.

It should be understood that the instruction flow in which NCI == 61070101 may be the foregoing NFC field strength message.

If the instruction flow in which NCI == 61070101 is not received, after the electronic device approaches the NFC card reader device, the card reader device determining module continues to wait for receiving the instruction flow in which NCI == 61070101NCI.

S903. When determining that the instruction flow in which NCI == 61070101 is received, the card reader device determining module starts a timer, and performs S905 if a first NCI instruction flow is not received before the timer expires.

In this case, if the card reader device determining module does not receive the first NCI instruction flow before the timer expires, the card reader device determining module may determine that the peer NFC card reader device is a card reader device of an access card. Then, the card reader device determining module may further determine that the card reader device of the access card is a user identification (user identification, UID) access card.

S904. After it is determined that the instruction flow in which NCI == 61070101 is received, if the card reader device determining module receives a first NCI instruction flow, and NCI == 6105xxyy00000000000000000000 in the first NCI instruction flow, the card reader device determining module performs S905.

In this case, if the card reader device determining module further receives the NCI instruction flow in which NCI == 6105xxyy00000000000000000000 after receiving the instruction flow in which NCI == 61070101, the card reader device determining module may determine that the peer NFC card reader device is a card reader device of an access card. Then, the card reader module may further determine that the card reader device of the access card is a Mifare access card. Herein, 6105 is a type definition of an RF activation notification message, xx represents a length of the following bytes, and yy represents an RF identity number (identity document, ID).

S905. The card reader device determining module obtains an AID list of activated cards in a default application.

S906. The card reader device determining module determines whether the AID list includes an AID corresponding to the access card.

S907. If determining that the AID list includes the AID corresponding to the access card, the card reader determining module determines whether the access card is a default card in the default application.

S908. If determining that the AID list does not include the AID corresponding to the access card, the card reader determining module indicates the default application not to pop up in foreground.

S909. If the access card is the default card in the default application, indicate the default application to pop up the access card in foreground.

In an embodiment, the default application may automatically pop up the access card, and the electronic device may display information about the access card by using a display.

S910. If the access card is not the default card in the default application, indicate an SE to activate the access card and deactivate the default card.

For example, if a default card in "Wallet" is a Chang'an card, the card reader determining module may indicate the SE to activate the corresponding access card and deactivate the Chang'an card.

After the SE activates the access card and deactivates the default card, the default application is indicated to pop up the access card in foreground.

In an embodiment, two or more access cards are stored in the default application. In this case, when indicating the SE to activate the access card and deactivate the default card, the card reader determining module may indicate a specific access card to be activated. When selecting the access card to be activated, the card reader determining module may select, based on a historical card swiping record, a current geographical location of the electronic device, and the like, the access card that needs to be activated.

For example, if a user uses a first access card for 100 times and uses a second access card for two times within a month, the card reader determining module may select the first access card to be activated.

For example, when selecting the access card that needs to be activated, the card reader determining module may determine the current geographical location of the electronic device, for example, obtain the current geographical location by using a global positioning system (global positioning system, GPS), and then determine, by using the geographical location, the access card to be activated.

It should be understood that the access card that needs to be activated may be selected in another manner. This is not limited in this embodiment of this application.

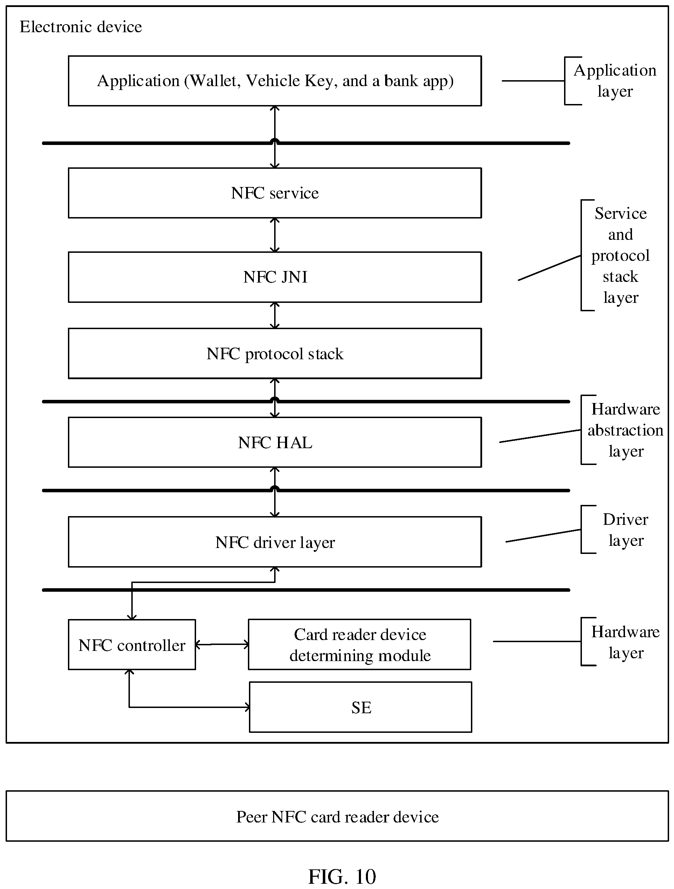

In the foregoing embodiments, the following description is provided: The NFCC uploads the NCI instruction flow to the NFC service network element, and then the NFC service network element sends the NCI instruction flow to the card reader device determining module for determining, to determine the type of the peer NFC card reader device. This application further provides another system architecture, as shown in FIG. 10. The NFCC may not upload the NCI instruction flow to the NFC service network element, but the NFCC directly sends the NCI instruction flow to the card reader device determining module for determining. After determining, the card reader device determining module may send a determining result to an application by using the NFCC, the NFC driver, the NFC HAL, the NFC protocol stack, the NFC JNI, and the NFC service, to indicate the application to pop up in foreground or indicate the application not to pop up in foreground.

The determining result of the card reader device determining module may be reported by using an NCI instruction flow. In this case, a private extended NCI instruction definition may be added, and the instruction definition is used to report and notify the determining result of the "card reader device determining module". Therefore, existing network elements, namely, the "NFC controller", the "NFC HAL", the "NFC protocol stack", the "NFC JNI", and the "NFC service" need to be modified, to report and process the newly added private NCI instruction flow

In this embodiment of this application, the NCI instruction flow-based card reader device determining module is added to the NFC controller network element, and then the determining result is reported and notified to the NFC service network element by using a newly added NCI instruction, to determine, based on the type of the peer card reader device, to pop up a specific application or not to pop up any application when there is no related application.

An embodiment further provides a computer-readable storage medium. The computer storage medium stores computer instructions. When the computer instructions are run on an electronic device, the electronic device is enabled to perform the related method steps, to implement the near field communication method in the foregoing embodiments.

The electronic device, the computer-readable storage medium, or the chip provided in the embodiments is configured to perform the corresponding method provided above. Therefore, for beneficial effects that can be achieved, refer to the beneficial effects in the corresponding method provided above. Details are not described herein again.

The foregoing descriptions about implementations allow a person skilled in the art to understand that, for the purpose of convenient and brief description, division of the foregoing function modules is taken as an example for illustration. During actual application, the foregoing functions can be allocated to different function modules and implemented based on a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or the units may be implemented in electrical, mechanical, or other forms.

The units described as separate parts may or may not be physically separate, and parts displayed as units may be one or more physical units, in other words, may be located at one place, or may be distributed on different places. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software function unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A near field communication method, wherein the method is applied to an electronic device, the electronic device comprises a first application, the first application comprises a plurality of virtual cards, the plurality of virtual cards comprise a first card and a second card, the first card is an activated card, the second card is a card that is not activated, and the method comprises:
when approaching a card reader device, receiving, by the electronic device, a near field communication NFC field strength sensing message and first indication information that are sent by the card reader device, wherein the first indication information is used to indicate an application identifier AID corresponding to the second card, or the first indication information is an application data packet, and the application data packet does not include information about an AID; and
when the first indication information is used to indicate the AID corresponding to the second card, executing, by the electronic device, a transaction with the card reader device by using the second card and displaying information about the second card in the first application; or when the first indication information is the application data packet, skipping displaying, by the electronic device, information about the first application.

2. The method according to claim 1, wherein the electronic device comprises a secure element SE, the SE stores an AID list, the AID list comprises information about the first card and the information about the second card, and before the electronic device displays the information about the second card in the first application, the method further comprises:
activating, by the electronic device, the second card in the AID list and deactivating the first card.

3. The method according to claim 1 or 2, wherein before the receiving, by the electronic device, first indication information sent by the card reader device, the method further comprises:
receiving, by the electronic device, second indication information sent by the card reader device, wherein the second indication information is used to indicate a first listening mode of a radio frequency circuit RF; and
determining, by the electronic device based on the first listening mode, that a peer device is the card reader device.

4. The method according to claim 3, wherein the first listening mode is an NFC_A_PASSIVE listening mode.

5. The method according to any one of claims 1 to 4, wherein the second card is a bus card or a bank card, and the displaying information about the second card in the first application comprises:
displaying, by the electronic device, fee deduction information and/or balance information of the second card.

6. An electronic device, comprising:
a display;
one or more processors;
one or more memories;
near field communication NFC chip; and
an application processor AP chip, wherein the AP chip comprises a first application, the first application comprises a plurality of virtual cards, the plurality of virtual cards comprise a first card and a second card, the first card is an activated card, and the second card is a card that is not activated; and
the one or more memories store one or more computer programs, the one or more computer programs comprise instructions, and when the instructions are executed by the one or more processors, the electronic device is enabled to perform the following steps:
when approaching a card reader device, receiving, by the electronic device, an NFC field strength sensing message and first indication information that are sent by the card reader device, wherein the first indication information is used to indicate an application identifier AID corresponding to the second card, or the first indication information is an application data packet, and the application data packet does not include information about an AID; and
when the first indication information is used to indicate the AID corresponding to the second card, executing a transaction with the card reader device by using the second card and displaying information about the second card in the first application; or when the first indication information is the application data packet, skipping displaying information about the first application.

7. The electronic device according to claim 6, wherein the electronic device further comprises a secure element SE, the SE stores an AID list, the AID list comprises information about the first card and the information about the second card, and when the instructions are executed by the one or more processors, the electronic device is enabled to perform the following steps:
before displaying the information about the second card in the first application, activating the second card in the AID list and deactivating the first card.

8. The electronic device according to claim 6 or 7, wherein when the instructions are executed by the one or more processors, the electronic device is enabled to perform the following steps:
before receiving the first indication information sent by the card reader device, receiving second indication information sent by the card reader device, wherein the second indication information is used to indicate a first listening mode of a radio frequency circuit RF; and
determining, based on the first listening mode, that a peer device is the card reader device.

9. The electronic device according to claim 8, wherein the first listening mode is an NFC_A_PASSIVE listening mode.

10. The electronic device according to any one of claims 6 to 9, wherein the second card is a bus card or a bank card, and when the instructions are executed by the one or more processors, the electronic device is enabled to perform the following steps:
when the first indication information is used to indicate the AID corresponding to the second card, executing a transaction with the card reader device by using the second card, and displaying fee deduction information and/or balance information of the second card.

11. A chip system, wherein the chip system comprises an application processor AP chip and a near field communication NFC chip, the AP chip comprises a first application, the first application comprises a plurality of virtual cards, the plurality of virtual cards comprise a first card and a second card, the first card is an activated card, and the second card is a card that is not activated, wherein
the NFC chip is configured to receive an NFC field strength sensing message and first indication information that are sent by a card reader device, wherein the first indication information is used to indicate an application identifier AID corresponding to the second card, or the first indication information is an application data packet, and the application data packet does not include information about an AID;
the AP chip is configured to receive an NFC field strength message and the first indication information that are sent by the NFC chip; and
when the first indication information is used to indicate the AID corresponding to the second card, the AP chip is further configured to control a display to display the information about the second card in the first application; or
when the first indication information is the application data packet, the AP chip is further configured to control the display not to display the information about the first application.

12. The chip system according to claim 11, wherein
the AP chip is further configured to: before controlling the display to display the information about the second card in the first application, send indication information to the NFC chip, wherein the indication information is used to indicate to activate the second card and deactivate the first card; and
the NFC chip is further configured to send indication information to a secure element SE, wherein the SE stores an AID list, and the AID list comprises information about the first card and the information about the second card.

13. The chip system according to claim 11 or 12, wherein
the NFC chip is further configured to: before receiving the first indication information sent by the card reader device, receive second indication information sent by the card reader device, wherein the second indication information is used to indicate a first listening mode of a radio frequency circuit RF;
the NFC chip is further configured to send the second indication information to the AP chip; and
the AP chip is further configured to determine, based on the first listening mode, that a peer device is the card reader device.

14. The system on chip according to claim 13, wherein the first listening manner is an NFC_A_PASSIVE listening mode.

15. The chip system according to any one of claims 11 to 14, wherein the second card is a bus card or a bank card, and the AP chip is specifically configured to:
control the display to display fee deduction information and/or balance information of the second card.

16. A computer-readable storage medium, comprising computer instructions, wherein when the computer instructions are run on an electronic device, the electronic device is enabled to perform the near field communication method according to any one of claims 1 to 5.

17. A computer program product, wherein when the computer program product runs on a computer, the computer is enabled to perform the near field communication method according to any one of claims 1 to 5.
